# EUROPEAN PATENT SPECIFICATION

(11) **EP 3 219 006 B1**
(45) Date of publication and mention of the grant of the patent: **09.09.2020**
(21) Application number: 15787428.0
(22) Date of filing: 21.10.2015
(51) Int. Cl.: H02S 20/25, H02S 40/34, H02S 30/10

(54) **INTEGRATED FRAME FOR PHOTOVOLTAIC MODULE**
INTEGRIERTER RAHMEN FÜR FOTOVOLTAIKMODUL
CADRE INTÉGRÉ POUR MODULE PHOTOVOLTAÏQUE

(30) Priority: 13.11.2014 US 201462079153 P; 13.04.2015 US 201562146585 P
(43) Date of publication of application: 20.09.2017
(73) Proprietor: Dow Global Technologies LLC, Midland, MI 48674 (US)
(72) Inventor: KOPPI, Kurt, A., Midland, MI 48640 (US); LOPEZ, Leonardo, C., Midland, MI 48640 (US); NAMJOSHI, Abhijit, A., Midland, MI 48674 (US); EURICH, Gerald, K., Merrill, MI 48637 (US); TUDOR, Jay, M., Goodrich, MI 48438 (US); LANGMAID, Joseph, A., Caro, MI 48723 (US); LUX, Mark, J., Midland, MI 48640 (US); STEMPKI, Matthew, A., Midland, MI 48640 (US)
(74) Representative: Beck Greener LLP
(86) International application number: PCT/US2015/056606
(87) International publication number: WO 2016/077041

(56) References cited:
- WO-A1-2011/019886
- WO-A2-2012/154307
- US-A1- 2012 264 319

## Description

### FIELD

The present teachings generally relate to a frame for providing support to a connector of a photovoltaic laminate and more specifically for controlling geometry of a connector and protecting the connector.

### BACKGROUND

Photovoltaic modules include an active portion that captures sunlight and converts sunlight into electricity. The active portion may be part of a composite of materials. A connector extends from the active portion so that an electrical connection, a mechanical connection, or both may be made. The connector during the manufacturing process may be misaligned, moved, bent, damaged, or a combination thereof by contact with one or more components of the manufacturing process such that the active portion cannot be used. The connector may form a cantilever connection with the active portion so that during removal of the active portion from the machinery and/or transportation the connectors may be damaged.

Typically, photovoltaic arrays are placed in an elevated location such as a roof top of a home or a building or in a rack and frame that elevates the photovoltaic array so that the photovoltaic array is exposed to sunlight. Each of these photovoltaic modules in order to get them to a roof top or elevated location are moved to the roof top or elevated location and then moved along the roof top or elevated location and into position, which may result in one or more of the connectors becoming damaged, bent, or unable to perform their connection function. Each photovoltaic module is then secured to the elevated location directly and/or indirectly by a connection structure such as a rack and frame so that a photovoltaic array is formed. Each photovoltaic module of the photovoltaic array includes an active portion and the active portions of two or more photovoltaic modules may be placed in close proximity with one another so that a photovoltaic array is formed by connecting each of the photovoltaic modules together.

In cases where the photovoltaic modules provide roofing functions (i.e., building integrated photovoltaic (BIPV)), the photovoltaic modules may include both an active portion and a support portion and the active portion of one photovoltaic module may fully and/or partially cover the support portion of an adjacent photovoltaic module to replace the framing and racking structure. In cases of building integrated photovoltaics, the support portion may provide roofing functions or structural functions for subsequent photovoltaic modules. The support structures of a roof may not have consistent flatness or strength due to variations in fabrication and/or age of the roof, and the shape of the roof may vary over time due to movement and/or aging of the foundation and/or roofing structure. At some point over the life of the photovoltaic array, the home owner, a repair person, an installer, or a combination thereof may be required to walk across the photovoltaic array. As the individual walks across the photovoltaic array, each individual photovoltaic module may bend and flex due to the variations in strength and/or flatness of the support structures, which may result in the photovoltaic module, a connector, or both bending enough so that the photovoltaic module, connector, or both are damaged. This weight and variation in strength may bend, crack, misalign, or a combination thereof connectors that connect the photovoltaic modules so that the connectors are not able to perform the mechanical and/or electrical connections to be formed. It would be attractive to have a photovoltaic module which has a connector that is resistant to damage from manufacturing movement, installation movement, or installed movement. It would be attractive to have a photovoltaic module where the cantilever connection of the connector is supported so that the geometry of the connector is maintained.

Examples of some photovoltaic modules may be found in U.S. Patent No. 5,437,735; 8,631 ,614; U.S. Patent Application Publication No. 2008/0271773; 2010/0180523; and International Patent Application No. WO201 1/019886; and Chinese Patent Nos. CN202839678U and CN202332933U all of which are incorporated by reference herein in their entirety for all purposes. It would be attractive to have a device that supports one or more edges of a photovoltaic module and especially a connector extending from an edge. It would be attractive to have a device that assist in aligning a connector with a photovoltaic laminate, maintaining the geometry of a connector relative to a photovoltaic module, or both. What is needed is a device that bolsters cantilever strength of the connector. What is needed is a device that assists sealing edges of the photovoltaic laminate proximate to a connector so that the edges, regions around the connector, or both are substantially impermeable to fluid penetration. What is needed is a reusable device that assists in compressing and forming a seal around all or a portion of a connector connected to and extending from a photovoltaic laminate.

US2012/0264319 A1 describes a solar cell panel connector and panel coupling body.

### SUMMARY

The present teachings provide a device for supporting one or both of the connectors for a photovoltaic laminate. The device may connect to the photovoltaic laminate proximate to the connector and provide support to the connector so that the connector substantially maintains its positioning over its lifetime. The device may provide lateral support, longitudinal support, or support in any direction therebetween. The device may assist in aligning the connector during formation. The device may form a mating connection with another device (i.e., a keeper) so that a sealed connection is formed between the device, the connector and the photovoltaic laminate, the connector is aligned with the photovoltaic laminate, or both.

The present teachings meet one or more of the present needs by providing: an integrated frame comprising: (a) an integration portion that forms a cantilever connection with a stack of material, (b) a cover connected to and extending from the integration portion, and (c) a pair of extensions connected to and extending from the cover, wherein the cover extends over and protects a connector that is connected to and extending from the stack of material.

The present teachings provide: a photovoltaic module comprising: (a) a photovoltaic laminate including: (i) one or more connectors connected to and extending from the photovoltaic laminate, and (ii) one or more integrated frames in communication with each of the one or more connectors; and wherein each of the one or more integrated frames are connected to the photovoltaic laminate in a location proximate to the one or more connectors so that the one or more integrated frames provide support to the one or more connectors during the manufacturing process, during use, during installation, or a combination thereof.

The present teachings provide: a method for forming a photovoltaic laminate, the method comprising: (a) aligning one or more integrated frames in a lamination frame; (b) aligning one or more connectors with each of the one or more integrated frames; (c) providing one or more layers of a laminate over the lamination frame and a portion of the integrated frame, a portion of the one or more connectors, or both; (d) applying pressure to the one or more layers of the laminate, the portion of the integration frame, and the lamination frame; and (e) heating the one or more layers of the laminate, the portion of the integration frame, and the lamination frame.

The teachings herein surprisingly solve one or more of these problems by providing a photovoltaic module which has a connector that is resistant to damage from manufacturing movement, installation movement, or installed movement. The present teachings provide a photovoltaic module where the cantilever connection of the connector is supported so that the geometry of the connector is maintained. The present teachings provide a device that supports one or more edges of a photovoltaic module and especially a connector extending from an edge. The present teachings provide a device that assist in aligning a connector with a photovoltaic laminate, maintaining the geometry of a connector relative to a photovoltaic module, or both. The present teachings provide a device that bolsters cantilever strength of the connector. The present teachings provide a device that assists sealing edges of the photovoltaic laminate proximate to a connector so that the edges, regions around the connector, or both are substantially impermeable to fluid penetration. The present teachings provide a reusable device that assists in compressing and forming a seal around all or a portion of a connector connected to and extending from a photovoltaic laminate.

### BRIEF DESCRIPTION OF THE DRAWINGS

FIG. 1 illustrates a perspective view of a photovoltaic module;
FIG. 2 illustrates a close-up view of an integrated frame of FIG. 1;
FIG. 3 illustrates an exploded view of a photovoltaic module;
FIG. 4 illustrates an exploded view of a lamination assembly and photovoltaic laminate;
FIG. 4A illustrates a close-up view of a keeper and integrated frame holding a connector in a lamination frame;
FIG. 4B illustrates a keeper and integrated frame with the lamination frame removed;
FIG. 5 is a perspective view of an integrated frame;
FIG. 6 is a view of an end of an integrated frame;
FIG. 7A is a side view of an integrated frame;
FIG. 7B is a side view of an integrated frame;
FIG. 8A illustrates a bottom perspective view of the integrated frame of FIG. 7A;
FIG. 8B illustrates a bottom perspective view of the integrated frame of FIG. 7B;
FIG. 8C illustrates a perspective view of the bottom side of the integrated frame of FIG. 8B including an adhesive strip;
FIG. 9 illustrates a perspective view of a rear side of a keeper;
FIG. 10 illustrates a perspective view of a front side of a keeper
FIG. 11 illustrates a perspective view of an integrated frame;
FIG. 12 illustrates a close-up view of an integrated frame alignment region;
FIG. 13 is a top view of a lamination assembly;
FIG. 14 is a perspective view of a lamination frame;
FIG. 15 is a perspective view of a front of a keeper;
FIG. 16 is a perspective view of a rear of a keeper;
FIG. 17 is a plan view of a lamination assembly with the keeper removed; and
FIG. 18 illustrates a perspective view of a lamination frame.

### DETAILED DESCRIPTION

The explanations and illustrations presented herein are intended to acquaint others skilled in the art with the teachings, its principles, and its practical application. Those skilled in the art may adapt and apply the teachings in its numerous forms, as may be best suited to the requirements of a particular use. Accordingly, the specific embodiments of the present teachings as set forth are not intended as being exhaustive or limiting of the teachings. The scope of the teachings should, therefore, be determined not with reference to the above description, but should instead be determined with reference to the appended claims, along with the full scope of equivalents to which such claims are entitled. The disclosures of all articles and references, including patent applications and publications, are incorporated by reference for all purposes. Other combinations are also possible as will be gleaned from the following claims, which are also hereby incorporated by reference into this written description.

A plurality of photovoltaic modules of the teachings herein are combined together to form a photovoltaic array. The photovoltaic array collects sunlight and converts the sunlight to electricity. Generally, each of the photovoltaic modules may be individually placed in a structure that houses all of the photovoltaic modules forming all or a portion of a photovoltaic array. The photovoltaic modules of the teachings herein may be used with a housing that contains all of the individual photovoltaic modules and make up a photovoltaic array. Preferably, the photovoltaic array taught herein is free of a separate structure that houses all of the photovoltaic modules that make up a photovoltaic array (also referred to as a solar array). More preferably, each individual photovoltaic module may be connected directly to a structure (i.e., is a building integrated photovoltaic (BIPV)) and each of the individual photovoltaic modules are electrically connected together so that a photovoltaic array is formed. Most preferably, each individual photovoltaic module may include a base plate, interconnection wiring, and a photovoltaic laminate. Each base plate may include a support portion, an active portion, and an overlap portion. The active portion (i.e., support portion and photovoltaic laminate) may overlap all or a portion of one or more adjacent photovoltaic modules (e.g., the overlap portion) forming a "double overlap" so that each photovoltaic module may be protected and connected to a connection surface and/or so that the combined photovoltaic modules may form a shingle structure for diverting fluids from the roof of the structure. Each of the photovoltaic modules may have a portion that may be indirectly and/or directly connected to a connection surface. The base plate may directly connect to a connection surface and the photovoltaic laminate may be connected to a support portion of the base plate (i.e., the photovoltaic laminate may be indirectly connected to the connection surface). Preferably, the overlap portion of each of the photovoltaic modules may be directly connected to a connection surface, and the active portion may be connected directly to the overlap portion or directly to the connection surface by a fastener that extends through the overlap portion, around the overlap portion, through a fastener support in the overlap portion, or a combination thereof. More preferably, each of the photovoltaic modules may include a base plate and a photovoltaic laminate and the base plate is connected to a connection surface by one or more fasteners that extend through fastener supports and preferably a plurality of fasteners that extend through fastener supports.

The fastener supports may be located within the active portion, the overlap portion, the support portion, or a combination thereof. Preferably, the fastener supports may be located within the overlap portion. The fastener supports may be a through hole that extends through the overlap portion, a weakened area so that a fastener may be placed through the fastener support, a removable portion, a punch out, an area of lower hardness, or a combination thereof. Preferably, the fastener supports may be a region where the base plate is reinforced so that fasteners may extend through and connect the photovoltaic module, the base plate, or both to the one or more connection surfaces and the fasteners do not damage the photovoltaic laminate when the base plate, the overlap portion, or both is subjected to movement. A plurality of fastener supports may extend across the width of the base plate. The fastener supports may be located in the base plate so that the photovoltaic laminate, the connectors, or both are prevented from moving, being damaged, bending, or a combination thereof. The one or more fastener supports and preferably a plurality of fastener supports may be located in the support portion, the overlap portion, or both of the base plate. The one or more fastener supports may be located proximate to one or more alternative fastener supports. The one or more alternative fastener supports may function to provide an alternative connection location in the event the fastener support aligns with a crack, a recess, a seam, cannot be used to form a connection, or a combination thereof. The one or more alternative fastener supports may be located proximate to and spaced apart from the fastener supports. Preferably, a plurality of fastener supports are located within the overlap portion of the base plate proximate to the support portion so that the photovoltaic module is connected to the connection surface.

The connection surface may function to provide support to one or more photovoltaic modules so that a photovoltaic array is formed. The connection surface may be a support structure such as a housing for containing one or more of the photovoltaic modules. Preferably, the connection surface may be a roof. The roof may be made of any material that has sufficient strength to support the weight of the plurality of photovoltaic modules. The roof may be made of any material so that the plurality of photovoltaic modules may be directly connected to the roof. The roof may be comprised of a plurality of panels made of wood, plywood, structural plywood, decorative plywood, overlaid plywood, commercial plywood, utility plywood, marine plywood, medium density fiberboard (MDF), oriented strand board (OSB), Sundela, hardboard, insulation board, the like, or a combination thereof. Alternately, the connection surface may be a series of structural components which do not form a continuous roof surface, such as in the case of a batten type roof structure. The plurality of photovoltaic modules may be connected to the connection surface so that the photovoltaic modules are adjacent to one another. Preferably, the photovoltaic modules may partially overlap each other. For example, the active portion and/or a support portion of one photovoltaic module may overlap an overlap portion of one or more adjacent photovoltaic modules in a similar fashion to how roofing shingles are applied to a roof. Preferably, a support portion of a base plate of one photovoltaic module may extend at least partially over an overlap portion of an adjacent base plate. Each of the base plates may include one or more fastener supports that may connect the base plate to a connection surface.

The plurality of photovoltaic modules and preferably each of the base plates may be connected to the connection surface by any fastener that has sufficient strength to withstand environmental conditions and form a secure connection. The plurality of base plates may be connected to a connection surface with a mechanical fastener, an adhesive, an interlocking connection with an adjacent photovoltaic module, or a combination thereof. The fasteners may be a screw, nail, bolt, staple, or a combination thereof. The adhesive may be epoxy based, silicone based, acrylic based, urethane based, polyamide based, polyolefin based, polyester based, a crosslinked adhesive, a thermoplastic adhesive, a pressure sensitive adhesive, a hot melt adhesive, a block copolymer, a segmented copolymer, a one part adhesive, a multi-part adhesive, a natural adhesive, a synthetic adhesive, or a combination thereof. If an adhesive is used, preferably an adhesive is used so that the pv laminate can be removed from the base plate without damaging the base plate, the pv laminate, or both. Although not preferred an adhesive and a mechanical fastener may be used to connect the pv laminate to the base plate, the photovoltaic module to a connection surface, or both. The adhesives discussed herein may connect an integrated frame to a pv laminate. The fasteners may connect a base plate, a base plate with a photovoltaic laminate, or both to a connection structure.

The base plate may function to provide roofing functions. The base plate may function to connect a photovoltaic laminate (hereinafter pv laminate) to a connection surface (e.g., a roof). The base plate may function to allow for decoupled expansion and contraction of the pv laminate relative to the base plate or vice versa. The base plate may function to allow for removal, replacement, repair, or a combination thereof of the pv laminate without removal of the entire pv module from the connection surface. The base plate may function to protect all or a portion of the pv laminate. The base plate may connect the pv laminate to a connection surface. The base plate may protect one or more connectors. The base plate may include one or more features to assist in forming a connection with one or more connection devices, one or more pv laminates, or both. The base plate may connect to a pv laminate forming an active portion.

The active portion may function to generate electricity when a pv laminate is connected to the base portion. The active portion may be a portion of the pv laminate that is not covered by one or more adjacent photovoltaic modules. The active portion may be a combination of a support portion of the base plate and a pv laminate.

The support portion may function to provide support to a pv laminate. The support portion may support a pv laminate during transportation. The support portion may function to support the pv laminate when a load is applied to the pv laminate when the pv laminate is connected to a connection surface. For example, when the photovoltaic module is connected to a roof and a person walks across the photovoltaic array the support portion may resist bending of the pv laminate so that the pv laminate is not damaged. The support portion may function to provide support for one or more adjacent photovoltaic modules. The support portion of a first photovoltaic module may function to overlap one or more connectors of one or more second adjacent photovoltaic modules so that the one or more connectors of the one or more second adjacent photovoltaic modules are protected. The support portion of a first photovoltaic module may protect one or more connectors that are connected to and extend between two adjacent second photovoltaic modules. The support portion may provide longitudinal support, lateral support, or both so that the pv laminate does not substantially deflect (i.e., enough to crack, break, or be damaged). The support portion may work in conjunction with all or a portion of an integrated frame. For example, an integrated frame may extend around all or a portion of a periphery of the support portion. In another example, an integrated frame may form a connection with a pv laminate and contact a portion of the support portion as the integrated frame extends towards the overlap portion. The pv laminate may be free of a fixed connection with the support portion. The support portion may not provide any sealing functions to the pv laminate. The pv laminate and the support portion may be free of a sealed connection. The support portion may include a connector channel or a portion of a connector channel.

The one or more connector channels may function to receive the one or more connectors of the pv laminate. The one or more connector channels may function to protect the pv laminate connectors from contact, a lateral force, a longitudinal force, an impact, bending, or a combination thereof. The one or more connector channels may assist in forming a connection between a connector (e.g., that connects two adjacent photovoltaic modules) and connector of a pv laminate. The one or more connector channels may receive all or a portion of an integrated frame, a connector, or both. The integrated frame may have a portion that extends into the connector channel. The integrated frame may entirely be located within the connector channel. The one or more connector channels may assist in electrically connecting two adjacent pv laminate connectors. Preferably, the one or more connector channels may be a recess that receives the connector of the pv laminate, all or a portion of an integrated frame, or both. The one or more connector channels may be generally sloped so that the connector channels assist in forming a connection between a connector and a connector of a pv laminate. The one or more connector channels may be located on opposite edges, in opposing edge regions, on opposite sides, or a combination thereof of the base plate. The one or more connector channels may receive all of the connector of the pv laminate. The one or more connector channels may angle downward so that the connector and the pv laminate are on the same plane. The one or more connector channels may be angled so that an integrated frame when connected to the connector may be flush with a surface of the base plate (e.g., the overlap portion).

The one or more and preferably the plurality of pv laminates may be configured in any manner so that each of the plurality of photovoltaic modules may be electrically connected. The pv laminates may include a protective cover (e.g., a glass cover) and pv cells (e.g., an electrical circuit). Each of the individual photovoltaic modules may be electrically connected to an adjacent photovoltaic module by one or more connectors. The one or more connectors may be a ribbon, a positive buss bar, a negative buss bar, a wire, a part of an integrated flashing piece, or a combination thereof. One or more connectors may extend between two adjacent photovoltaic modules and form an electrical connection. The one or more connectors may be a discrete piece that connects two adjacent pv laminates, extend from a pv laminate, or both. The connectors may be a separate piece, a discrete piece, or both that connects two or more adjacent photovoltaic modules, integrated flashing pieces, or a combination of both. The connectors may extend from an active portion of the photovoltaic module, be part of a photovoltaic module, or both. The connectors may be an integral part of a pv laminate. The connectors may be connected to the photovoltaic laminate "pv laminate" in a lamination assembly.

The photovoltaic laminate may be connected to a base plate, a support portion of the base plate, or both and form an active portion. The pv laminate may be made of any material so that when sunlight is directed on the active portion the sunlight in converted into electricity. The pv laminate may be made of one or more photovoltaic cells having a photoactive portion. Preferably, the pv laminate may be made of a plurality of photovoltaic cells. The photovoltaic cells may be made of any material that assists in converting sunlight into electricity. The photovoltaic cells may be of any type and material known in the art. Some non-limiting examples of materials that the photovoltaic cells may be made of include crystalline silicon, amorphous silicon, cadmium telluride (CdTe), gallium arsenide (GaAs), copper chalcogenide type cells (e.g. copper gallium selenides, copper indium gallium selenides, copper indium selenides, copper indium gallium sulfides, copper indium sulfides, copper indium gallium selenides sulfides, etc. (i.e., known generally as CIGSS)), amorphous silicon cells, crystalline silicon cells, thin-film III-V cells, thin-film II-VI cells, IB-IIIA-chalcogenide (e.g., IB-IIIA-selenides, IB-IIIA-sulfides, or IB-IIIA-selenide sulfides), organic photovoltaics, nanoparticle photovoltaics, dye sensitized photovoltaic cells, and/or combinations of the described materials. In one specific example, the copper indium gallium selenides may be represented by the formula Culn(1-x)GaxSe(2-y)Sy where x is 0 to 1 and y is 0 to 2. For copper chalcogenide type cells, additional electroactive layers such as one or more of emitter (buffer) layers, conductive layers (e.g. transparent conductive layers) or the like maybe used in CIGSS based photovoltaic cells are contemplated by the teachings herein. Other materials and/or combinations are contemplated herein especially those compositions disclosed in paragraph 0054 of U.S. Patent Application Publication No. 2012/0118349, which is incorporated herein by reference as to materials for the active portion. The photovoltaic cells of the photovoltaic laminate may be arranged in parallel, series, mixed series-parallel, and/or may be provided in independent circuits. The photovoltaic laminate may be a combination of layers and may form a pv laminate assembly.

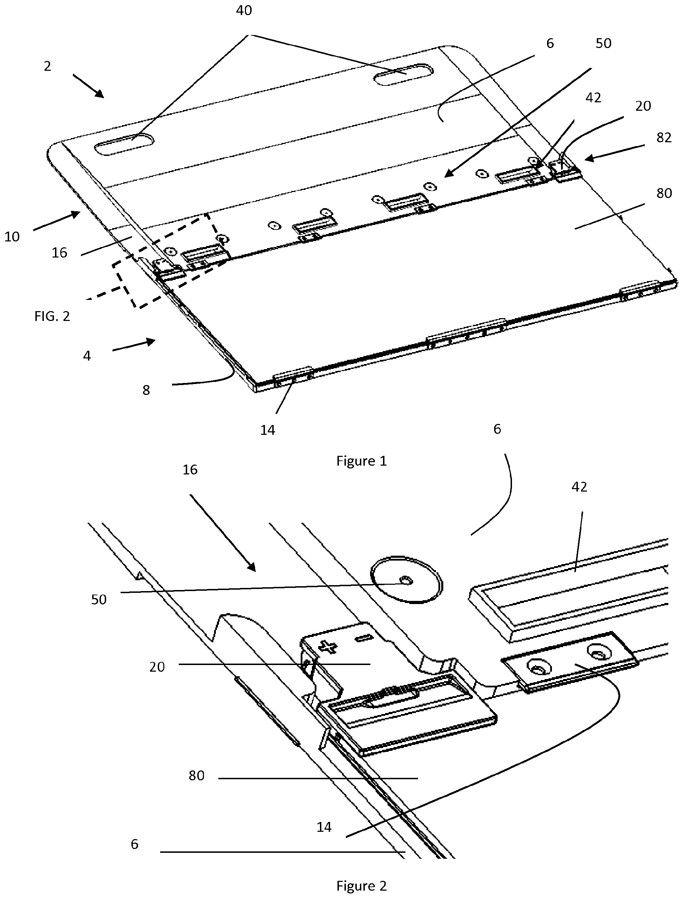

The pv laminate assembly may include one or more of the following components: a forward protective layer, a rearward protective layer, a reinforcement, a photovoltaic cell, a peripheral moisture sensitive edge seal, one or more internal protecting layers, dielectric materials as may be needed to manage the penetration of electrical components outside the laminate, attached connectors and wiring boxes, connector support structures including junction boxes, integrated low profile connectors, encapsulants, moisture resistant back sheets that may optionally include metallized sub layers, or a combination thereof. One example of a pv laminate may include a top layer of glass or a polymeric moisture barrier, an encapsulant layer, an electrical assembly comprising cells, bypass diodes and busses, a rear encapsulant layer, an aluminum based multi-layer back sheet, another encapsulant layer, a rearward protective layer, additional layers around the connector area including a connector support structure, an encapsulant, a dielectric layer, a connector sealant material such as an adhesive with a moisture barrier or another adhesive sealant, the low profile connector attached to the cells with bus terminals, another layer of encapsulant, and another dielectric layer. The rearward protective layer may help protect the laminate from any protrusions or abrasion from the support structure of the base plate. The pv laminate assembly may be free of an encapsulant layer, a rearward protective layer, or both. One or more of the layers discussed herein may be a combination of layers. For example, a forward protective layer may be a combination of multiple glass layers combined together. As another example, the reinforcement may be a plurality of layers bonded together. The layers of pv laminate assembly may be laminated together. The layers of the pv laminate may be sealed at the edges. Preferably, the pv laminate has a peripheral sealed edge that is resistant to fluid penetration. As discussed herein, each individual layer may include an adhesive so that one or more layers are bonded together forming a layer, each layer may include an adhesive over and/or under another layer so that the one or more adjacent layers are bonded together. Other components and layers of the photovoltaic module are contemplated herein that may be used with the reinforcement taught herein especially those components, layers, and/or materials disclosed in Paragraph Nos. 0048-0053 of U.S. Patent Application Publication No. 2012/0118349, and Paragraph Nos. 0027-0038 and Figures 2A and 2B 2011/0220183, both of which are expressly incorporated herein by reference as to components, layers, and/or materials for active portions that may be used in conjunction with the reinforcement and photovoltaic module discussed herein. One or more of the layers of the pv laminate may be electrical circuitry. The electrical circuitry may be sealed within the pv laminate.

The electrical circuitry of the photovoltaic laminate may be one or more electrically conducting elements (i.e., buss bars), one or more ribbons (i.e., extend from cell to cell of the pv laminate), or both. The electrical circuitry may extend from cell to cell, photovoltaic module to photovoltaic module, cell to a photovoltaic module, active portion to active portion, or a combination thereof. The electrical circuitry may be integrated into the one or more photovoltaic cells, connect the one or more photovoltaic cells, be electrically connected to the one or more photovoltaic cells, or a combination thereof. The electrical circuitry may be integrated into and/or around one or more layers of the photovoltaic laminate. The electrical circuitry may extend through the photovoltaic laminate, extend partially outside of the photovoltaic laminate so that an electrical connection may be formed, have a portion that is located adjacent to the photovoltaic laminate, or a combination thereof. The photovoltaic laminate may be connected to a support portion of a base plate forming an adjacent portion. The pv laminate may include one or more connectors that are part of the electrical circuitry and extend outside of the pv laminate. The one or more connectors may have a portion that is sealed within the pv laminate and a portion that extends out of the pv laminate.

The one or more pv laminate connectors may function to provide an electrical port for ingress, egress, or both of electricity through each of the pv laminates. The one or more pv laminate connectors may be partially located within the pv laminate and partially extend out of the pv laminate. For example, the pv laminate connector may have a header portion that is external to the pv laminate and two or more terminals that extend into the pv laminate. Each of the pv laminate connectors may include an encapsulant layer (e.g., DNP), a polyolefin encapuslant, an adhesive (e.g., ADCO), a header, terminals, a dielectric layer, protective layers, a header body, a plastic cover, or a combination thereof. All of the layers of the pv laminate may be self-contained and be retained within the pv laminate connector during manufacture. One or more of the layers may flow during manufacture so that the material flows into contact with an adjacent layer and assists in forming a connection with the adjacent layer (e.g., an integrated frame). Preferably, the pv laminate connector and the integrated frame are not directly connected together. The pv laminate, the connectors, or both may be connected to an integrated frame. The integrated frame may assist in connecting the connector to the pv laminate. The integrated frame and connector may be placed between a keeper and a lamination frame while the connector is connected to the pv laminate.

The one or more integrated frames may function to protect a connector, one or more edges of a pv laminate, or both. The one or more integrated frames may function to align the connector within a manufacturing assembly (e.g., a lamination assembly and/or lamination frame). The integrated frames may function to prevent damage to electrical conducting elements, wires, buses, terminals, or a combination thereof during manufacturing, transportation, installation, due to environment (e.g., wind, water, debris), maintenance of the photovoltaic array, or a combination thereof. The integrated frames may function to prevent movement of the connector during formation of the pv laminate, during attachment of the pv laminate to the base plate, during transportation of the pv laminate, during transportation of the photovoltaic module, or a combination thereof. The integrated frames may form a cantilever connection with the pv laminate. The integrated frames may connect to a pv laminate and extend over the connector. The integrated frame may have one anchored end and one free end. The integrated frame may connect to a pv laminate and contact the connector channel so that the connector is located under the integrated frame and is protected between the base plate (e.g., the connector channel) and the integrated frame. Two integrated frames may be connected to the pv laminate. A single integrated frame may extend over all of the connectors of the pv laminate. A single integrated frame may be connected to the pv laminate. An integrated frame may be located proximate to each connector. A plurality of integrated frames may be part of each photovoltaic module. Each pv laminate connector may be covered by a discrete integrated frame. For example, if the pv laminate incudes two connectors then each connector may include an integrated frame. The integrated frame may extend around a periphery of the pv laminate. The integrated frame may extend along one or more sides, one or more edges, or both of the pv laminate. The integrated frame may be connected to one or more sides and/or one or more edges of the pv laminate. The integrated frame may be multiple discrete pieces that connect to the pv laminate and protect the connectors. The integrated frame may include a cover that extends partially and/or fully over the connector.

The cover may function to extend over all or a portion of the connector. The cover may function to prevent movement of the connector away from the base plate. The cover may function to protect the connector from direct contact with environmental conditions (e.g., hail, rain, flying debris). The cover may extend beyond an end of the connector and assist in forming a connection with an adjacent connection mechanism (i.e., a connector that extends between two adjacent pv laminates). Each integrated frame preferably includes at least one cover and the cover is a portion that extends over all or a portion of a connector extending from the pv laminate. The cover may form a flat surface for a portion of an adjacent photovoltaic module to rest on, contact, overlap, or a combination thereof. The cover may provide support to a person stepping on the photovoltaic module. The cover may be a part that extends cantilever over the connector, extends over a connector and is supported on one or more sides, or both. The cover may prevent a person from stepping directly on the connector. The cover may extend from an edge of a pv laminate. The cover may be connected to or be part of an integration portion.

The one or more integration portions may function to form a connection with a pv laminate. The one or more integration portions may form a cantilever connection with a pv laminate. The integration portion may form a connection and support the integrated frame so that the cover extends cantilever from the pv laminate. The one or more integration portions may be integrated into the pv laminate, connected to the pv laminate, or both. Preferably, the integration portions are connected to an outer layer of the pv laminate. More preferably, the integration portions are connected to a layer of glass on an outside of the pv laminate. The integration portion may extend between layers of the pv laminate. The one or more integration portions may cover a portion of a pv laminate. The integration portions and the covers may be two discrete pieces. Preferably, the integration portion and the cover are one piece and the integration portion extends over the pv laminate to form a connection and the cover extends over the connector. The one or more integration portions may overlap the pv laminate and create a connection with the pv laminate. The integration portion may form a connection with the pv laminate by an adhesive, an encapsulant, or both. The connection region of the integration portion may form a fixed connection with the pv laminate. The integration portion may form a connection with the pv laminate that is sufficiently strong so that the integrated frame is resistant from being removed from the pv laminate. The integration portion may form a connection with the pv laminate that is sufficiently strong that the pv laminate withstands a force of about 0.55 MPa (80 psi) or more, about 1.1 MPa (160 psi) or more, about 2.2 MPa (320 psi) or more when measured using a removal test as is discussed herein. The removal test method places a pv laminate including a connected integrated frame into a stand to support the pv laminate. A weight is applied to the pv laminate to prevent the pv laminate from rotating or moving off of the stand and then an actuator applies a force to a terminal end of the integrated frame furthest from the edge of the laminate. The actuator includes a 3/8" diameter hemispherical tip and the actuator is connected to a load cell. The actuator moves downward at a rate of 1 in/min until bond between the integrated frame and the pv laminate breaks. The load peak of the load cell is recorded so that the maximum force is determined. The integration portion may be connected to the pv laminate using one or more fasteners that are discussed herein and which may be used to connect other components of the pv laminate, lamination frame, assembly, or a combination thereof together.

The fasteners may function to create a connection without damaging the pv laminate, impeding creation of electricity by the pv laminate, reducing the exposed surface area of the pv laminate, or a combination thereof. The fastener may be a mechanical connector that connects the integrated frame to the pv laminate. The mechanical connection may be heat bonding, pressure bonding, heat staking, heat bonded lamination, melting, or a combination thereof. The mechanical connection may be a mechanical fastener a screw, bolt, rivet, nail, threaded fastener, or a combination thereof. Preferably, the fastener is an adhesive. The adhesives may be an epoxy, hot melt, tape, pressure sensitive adhesive (e.g., tape), epoxy based, silicone based, acrylic based, urethane based, polyamide based, polyolefin based, polyester based, a crosslinked adhesive, a thermoplastic adhesive, a block copolymer, a segmented copolymer, a one part adhesive, a two part adhesive, a multi-part adhesive, a natural adhesive, a synthetic adhesive, or a combination thereof. Preferably, the adhesive is a polyolefin based adhesive. The adhesive may function to bond two dissimilar materials together. For example, the adhesive may bond plastic to glass. The adhesive may be a softening and/or flow of a material of the pv laminate into contact with the integrated frame so that a fixed connection is formed therebetween. The one or more adhesives may assist in increasing the strength of a mechanical fastener, a mechanical connection, or both so that the integrated frame is connected to the pv laminate by the integration portion. The one or more fasteners may form a connection between the integration portion and the pv laminate at a connection region.

The connection region may function to receive one or more fasteners and create a connection. The connection region may function to integrally connect the integrated frame to the pv laminate. The connection region may have an area that is part of and/or the same size as the integration portion. The connection region may include one or more recesses for receiving adhesive. The connection region may have features that include an increased surface area (e.g., grooved, dimpled, recessed, channels) for assisting in strengthening a connection when compared to a connection region that does not include features that increase surface area (e.g., smooth). The connection recesses may include one or more grooves that allow adhesives, encapsulant, material of the pv laminate, material of the integrated frame, or a combination thereof to flow and create a fixed connection between the pv laminate and the integrated frame. The connection region may be a part of the integration portion that does not include any pieces extending from the sides and/or edges (e.g., step extensions and/or extensions). For example, the connection region is substantially planar and does not include any portions extending there from towards the pv laminate so that a fixed connection is formed. The connection region may be substantially planar. The connection region may terminate at one or more ledges, one or more step extensions, one or more extensions, or a combination thereof. The connection region may include one or more pockets that receive adhesive, bonding agents, or both.

The one or more pockets may function to retain adhesive, bonding agents, or both within the connection zone. The one or more pockets may function as a recess, a retention area, a reservoir, or a combination thereof. The one or more pockets may function to create a depth so that a pool of adhesive, bonding agents, or both is created. The one or more pockets may have one or more posts that extends around a periphery. The one or more pockets may have open spaces so that excess adhesive, bonding agents, or both can flow out of the pockets during formation of a connection. The one or more pockets may have a constant depth within their area. The depth of the pockets may vary. For example, the deepest part of the pocket may be in the center and the depth may gradually reduce as the pocket extends towards the edges. In another example, the deepest part may be on the edges and the depth may reduce as the pocket extends towards the center. Preferably, the depth of the pocket is substantially constant. The one or more pockets may be a single large pocket. The one or more pockets may be a plurality of pockets that are separated by one or more features (e.g., internal posts) that resist movement of adhesive, bonding agents, or both within the connection region. The one or more pockets may be formed on the cover. The one or more pockets may be formed on a bottom wall of the cover. The one or more pockets may terminate at a ledge, proximate to a channel in a ledge or both. The one or more pockets may have posts on three sides and a ledge on a fourth side. The one or more pockets may be formed by one or more posts contacting an adjacent surface and forming a gap between a connection region of the integrated frame and the adjacent surface.

The one or more posts may function to create one or more pockets. The one or more posts may function to partially and/or fully create an enclosed space forming one or more pockets. The one or more posts may extend along one or more sides, two or more sides, or even three or more sides. The one or more posts may extend along a full length of a side. The one or more posts may intermittently extend along a side. The one or more posts may be located in corners of the connection regions. The one or more posts may be generally "L" shaped, form a right angle, extend on two sides, or a combination thereof. One or more spaces may be located between the one or more posts. The one or more posts may have height of about 0.1 mm or more, about 0.5 mm or more, about 1 mm or more, or even about 1.5 mm or more. The one or more posts have a height of about 3 cm or less, about 2 cm or less, or even about 1 cm or less (i.e., the height as measured from the wall of the connection region to the location of the post where the post contacts an adjacent surface). The one or more posts may include one or more openings. The openings in the posts may be a space between adjacent posts, a through hole in a post, or both. The openings may be a portion of a post with a lower height. For example, if the height of the post is about 1 mm then the opening may have a height of about 0.5 mm or less. The openings may allow adhesive and/or bonding agents to leave the pocket at predetermined regions. The openings may be located at a bottom of a post (e.g., near the component to be adhered to), a top of the post (i.e., near the cover), or a location between the top and the bottom of the post. The one or more posts may be located in corners, in a central location, or both. The one or more posts may be connected. The one or more posts may be discrete from each other. The one or more posts may be located proximate to the one or more step extensions.

The one or more step extensions (hereinafter step), one or more extensions, or both may function to support the integrated frame over, above, or both the connector. The one or more steps, one or more extensions, or both may function to provide support to the cover, the integration portion, or both. The one or more steps, one or more extensions, or both may extend from an edge, an edge region, or both and provide support to the integrated frame so that a substantially constant gap is created between the integrated frame and the base plate. The one or more extensions, one or more steps, or both may form a connector recess through the integrated frame so that a connection can extend through the connector recess. The one or more steps, one or more extensions, or both may provide support to the cover, the integration portion, or both. The one or more steps, one or more extensions, or both may maintain a connector recess that the connector extends through so that when a force is applied to the photovoltaic module the connector recess protects the pv laminate connector. The one or more steps, one or more extensions, or both may be substantially the same size and shape and provide substantially the same amount of support to the integrated frame. The one or more steps, one or more extensions, or both may have a portion that extends from each side and/or edge of the integrated frame. The one or more steps, one or more extensions, or both may extend from opposing sides and/or edges, a single side and/or edge, a plurality of sides and/or edges, or a combination thereof. The one or more steps, one or more extensions, or both may extend towards the base plate, into contact with the base plate, into contact with the pv laminate, or a combination thereof. The one or more extensions may support the cover, the integration portion, or both. The one or more steps may be shorter than the one or more extensions. The one or more steps may progressively change in length to form a complementary shape to the pv laminate and its associated components, the base plate, or both. The one or more steps may contact the pv laminate so that only the connector recess (and portions that form the connector recess) extends over the pv laminate. The one or more steps may extend away from the integration portion at an angle so that a portion (e.g., a vertical portion (i.e., ledge)) of the steps contact an edge of a pv laminate and assists in forming a connection, prevent movement of the integration frame longitudinally over the pv laminate, or both. The one or more steps may create a stop and contact with a portion of the base plate to support the integrated frame. The one or more steps may create a stop and include a connection surface for connecting the integrated frame to the pv laminate. The one or more steps may be located proximate to a ledge, include a ledge, or both.

The one or more ledges may function to create a stop. The one or more ledges may separate the cover and the integration portion. The one or more ledges may function to assist in aligning the integrated frame with the pv laminate, the base plate, or both. The one or more ledges may function to create contact between the integrated frame and the base plate. Preferably, in an installed position the one or more ledges contact the pv laminate and position the integrated frame relative to the pv laminate. The one or more ledges may form a bridge between a step extension and an extension. The one or more ledges may be an intermediate step between the step extension and the extension. The one or more ledges may be a vertical portion and/or wall of a step. The one or more ledges may elevate all or a portion of the integrated portion above the base plate so that a connector recess is created under the integrated frame. The one or more ledges may include one or more channels for receiving and holding adhesive, bonding agent, or both.

The one or more channels may function to retain adhesive, bonding agent, or both. The one or more channels may be a cavity, a through hole, a recess, an aperture, or both. The one or more channels may function to prevent adhesive, bonding agent, or both from flowing out of the connection region from along the ledges. The one or more channels may allow adhesive or another material to flow into the pocket of the integrated frame. The one or more channels may be a concave feature, dimples, or both in the ledge. The one or more channels may be a concave feature where the ledge extends inward away from the connection region. The one or more channels may extend inward so that other ledges are located forward of the channels relative to the connection region. The one or more channels may be a recess in the ledges. The one or more channels may allow for adhesive, bonding agent, or both to extend between an adjacent surface and one or more ledges so that the adhesive, bonding agent, or both is retained proximate to the connection region. The one or more channels may be generally "U" shaped. The one or more integrated frames may include a channel on each side of the connector recess.

The one or more connector recesses may function to create a space for a connector. The one or more connector recesses may function to create a protected location for the connector. The one or more connector recesses may function to assist in forming a connection between two or more connectors. The one or more connector recesses may substantially surround a connector, be a space that the connector extends through so that the connector is surrounded by the integrated frame, or both. The one or more connector recesses may be formed by the integrated frame extending around two or more sides, three or more sides, or even four or more sides of a connector. The connector recesses may include an open end for receiving a connector. The connector recesses may extend under the cover, a part of the integration portion, or both. The connector recess may extend between two or more opposing steps, extensions, or both. The connector recess may be a through hole, an absence of material, or both. The walls of the integrated frame that form the connector recesses may prevent the connector from moving laterally, moving longitudinally, being bent, terminals of the connector being bent, a connection between two connectors being disconnected, or a combination thereof. The walls extending about the connector recess may contact all or a portion of a connector so that the connector is aligned relative to the pv laminate, the connector is positioned within a lamination frame, within a laminator, or a combination thereof. The connector recess may be configured so that the connector can only be installed within the connector recess in a single configuration. The connector recesses may include one or more alignment recesses and preferably a plurality of alignment recesses.

The walls defining the one or more alignment recesses may function to align one or more terminals, one or more terminal covers, one or more alignment portions of a connector, or a combination thereof. The walls extending about the one or more alignment recesses may function to protect one or more terminals. The walls forming the one or more alignment recesses may align one or more terminals to one or more connectors. The walls forming the one or more alignment recesses may sandwich one or more and preferably a plurality of terminals between the integration frame and the pv laminate, the base plate, or both. The one or more alignment recesses may function to receive a protrusion of a connector, an alignment portion of a connector, or both. The one or more alignment recesses may function to prevent the connection from moving relative to the integrated frame. The one or more alignment recesses may prevent lateral movement, longitudinal movement, or both of the connector. The one or more alignment recesses, may laterally align, longitudinally align or both the connector relative to the integrated frame, the pv laminate, or both. The one or more alignment recesses may be used in conjunction with one or more alignment cavities.

The walls forming the one or more alignment cavities may function to prevent movement of the connector relative to the integrated frame. The walls defining the shape of the one or more alignment cavities may function to align a connector within a lamination frame, within the integrated frame, or both. The walls defining the shape of the one or more alignment cavities may function to only allow a connector to be placed in the integrated frame in a single configuration. Each of the one or more alignment cavities may have a different shape and size. For example, one alignment cavity may be generally rectangular and one alignment cavity may include a shape with an arcuate segment. The alignment cavities may be mirror images. The alignment cavities may be formed in the step extensions, the extensions, or both. The alignment cavities may be formed in a wall of the step, the extension, or both that is located between the cover and/or integration portion and the base plate, the pv laminate, or both. The alignment cavities may receive an ear of a connector, a protruding portion of a connector, or both. The walls forming the alignment cavities may extend around one or more sides, one or more ends, or both of a connector, an ear of a connector, or both. The alignment cavities may be an absence of material, a recess formed within material and/or a wall, or both. The alignment cavities may be generally "C" shaped. The alignment cavities may extend around a distal end and a proximal end of an ear of a connector so that the alignment cavity prevents movement distally or proximally relative to the ends of the integrated frame. The alignment cavities may only allow for a connector to be vertically installed within the integrated frame. The alignment cavities of the integrated frame may hold the connector in a specific position so that one or more keepers may extend around all or a portion of the connector, all or a portion of the integrated frame, or both. The integrated frame may be made of the same material as the base plate. The integrated frame base plate, or both may be made of a polymeric composition.

The polymeric composition may be any polymeric composition that may be flowable, have high electrical insulating properties, fluid impermeable, high flexibility, low creep, low modulus, fire retardant, or a combination thereof. Some polymeric compositions that may be used with the photovoltaic module taught herein are an elastomer, thermopolastic, thermosetting polymer, or a combination thereof. The polymeric composition may include a filled or unfilled moldable plastic, polyolefins, acrylonitrile butadiene styrene (SAN), hydrogenated styrene butadiene rubbers, polyester amides, polysulfone, acetal, acrylic, polyvinyl chloride, nylon, polyethylene terephthalate, polycarbonate, thermoplastic and thermoset polyurethanes, polyethylene, polystyrene, synthetic and natural rubbers, epoxies, , polystyrene, thermoplastic elastomer (TPO, TPE, TPR), polyamides, silicones, vinyl based resins, or any combination thereof. The polymeric composition may be free of fillers, fibers, reinforcing materials, or a combination thereof. The polymeric composition may include fillers such as colorants, fire retardant (FR) or ignition resistant (IR) materials, reinforcing materials, such as glass or mineral fibers, surface modifiers, or a combination thereof. The polymeric composition may also include anti-oxidants, release agents, blowing agents, and other common plastic additives. Examples of suitable polymeric compositions are found in U.S. Patent Application Publication No. 2011/0100438 the contents of which are expressly incorporated by reference herein for the polymeric compositions.

The one or more keepers may function to align an integrated frame, a pv laminate connector, or both within a lamination frame, a piece of manufacturing equipment, or both. The one or more keepers may function to assist in sealing an end of the connector that is in communication with the pv laminate. The one or more keepers may function to create a homogeneous seal around an end of a pv laminate connector. The one or more keepers may evenly distribute pressure about an end of a pv laminate connector, an edge of a pv laminate, or both. The one or more keepers may be removed once a seal is created. The one or more keepers may extend over a portion of a pv laminate connector and a portion of the pv laminate so that when the pv laminate is formed the keeper assists in forming a seal around a portion of the connector. The one or more keepers may be reused to create more seals. The one or more keepers may be integrated into a connector, an integrated frame, or both. The one or more keepers may be made of any material that is compressible. The material of the keeper may have elastic characteristics. The material may be elastically deformable. The material may include rubber, an elastomer, plastic, a crosslinked elastomer, a thermoplastic elastomer, a silicone rubber, a block copolymer, acrylonitrile butadiene styrene, a segmented copolymer, polyurethane based, polyester based, polyolefin based, polyamide based, natural rubber, synthetic rubber, metal, aluminum, or a combination thereof. Preferably, the keeper is free of metal. The keeper may be generally square shaped, rectangular, oval, circular, be a frame, have a periphery, or a combination thereof. The keeper may have a complementary shape to the pv laminate connector, the integrated frame, the lamination frame, the lamination border, the alignment region of the lamination frame, or a combination thereof. For example, the keeper may have a portion that complements the step extensions, extensions, ledges, or a combination thereof so that when the keeper contacts the connector, the integrated frame, or both the cover and/or integration portion are substantially parallel to the top side of the keeper (i.e., a side of the keeper that is located opposite the integrated frame, the connector, or both). The keeper may be a periphery that extends around one or more through holes and/or one or more windows. Stated another way, one or more through holes and/or windows may extend through the keeper.

The one or more windows may function to hold all or a portion of the connector, the integrated frame, or both. The one or more windows may extend over, around, proximate to, or a combination thereof the connectors, the integrated frames, or both. Preferably, the window includes at least a portion that is a through hole. The window may include a portion that is a reduced thickness (i.e., a connector window) relative to the main portion of the window. For example, the window may include a periphery with a through hole extending through the center of the keeper and a connector window may be located between the periphery and the through hole. The connector window may have a thickness that is about a quarter the thickness or less, half the thickness or less, three quarters the thickness or less, of the thickest portion of the keeper, the periphery of the keeper, or both. The window may function to receive a connector and form a border around the connector. The window may receive the connector and include a connector window that extends over the terminal region of the connector. The window may form a temporary connection with the connector, the integrated frame, or both so that the keeper is retained on the connector, the integrated frame, or both. The window may allow the keeper to plastically deform so that the connector may be inserted in the window and then the keeper may retract to hold all or a portion of the connector. The window may include recesses to receive a portion of the connector, the integrated frame, or both. The one or more windows may include one or more steps. The one or more windows may have a complementary shape to the connector, the integrated frame, the lamination frame, the alignment region of the lamination frame, the lamination border, or a combination thereof. The peripheral portion of the keeper that extends around the window, the connector window, or both may include one or more complementary portions. The peripheral portion of the keeper that extends fully around and/or partially around the connector, the integrated frame, or both may be a lamination frame contact portion, a laminate contact portion, a bridge, or a combination thereof.

The one or more lamination frame contact portions may function to create a seal with the lamination frame, contact a portion of the lamination frame, or both. The one or more lamination frame contact portions may prevent material of the pv laminate, the connector, or both from extending out of the window, past the keeper, or both. The one or more lamination frame contact portions may function to evenly distribute a force, pressure, or both during the manufacturing process, the lamination process, or both. The one or more lamination frame contact portions may contact the lamination frame and create two generally parallel surfaces. For example, one side of the keeper may be generally parallel to one side of the lamination frame and the integrated frame may be generally parallel to a second side of the lamination frame. The one or more lamination frame contact portions may contact an outer periphery of the lamination frame. The keeper may include two lamination frame contact portions and the lamination frame contact portions may be located on opposing sides of the window, the connector window, or both. The keeper may include a plurality of lamination frame contact portions. The lamination frame contact portions may assist in locating the keeper so that a sealed edge may be formed in the pv laminate relative to the pv laminate connector. The lamination frame contact portion may be free of contact with the pv laminate. The lamination frame contact portion may only contact the lamination frame. The one or more lamination frame contact portions may be located between a laminate contact portion and a bridge. The lamination frame contact portions may be separated from both the bridge and the laminate contact portion by one or more steps.

The one or more laminate contact portions may function to create a seal with the lamination frame, the pv laminate, the lamination border, or a combination thereof. The one or more laminate contact portions may function to bridge a gap between the lamination border and the pv laminate. The one or more laminate contact portions may function to extend over both the pv laminate and the lamination border so that a portion of the pv laminate proximate to the lamination border is sealed, pressure is equally distributed over the edge of the pv laminate, or both. The laminate contact portions may extend over the pv laminate, the lamination frame, lamination border, the integrated frame, a pv laminate connector, or a combination thereof. For example, the integrated frame may contact the lamination border and the lamination border may contact the pv laminate, which includes a pv laminate connector, and the laminate contact portion may extend over all three so that a seal is formed between the two contact regions. The one or more laminate contact portions may have an even thickness across the length and/or width of the laminate contact portion. The laminate contact portion may generally taper as the laminate contact portion extends away from the lamination frame contact portion, extends towards an edge of the pv laminate, an edge of the lamination frame, or a combination thereof. The laminate contact portion may be generally "U" shaped. The lamination frame contact portion may include one or more steps. The lamination frame contact portion may have one or more portions that mirror the shape of the integrated frame, the contact locations of the lamination assembly, or both. The laminate contact portion may include a connector window. The laminate contact portion may contact the connector, terminals of the connector, a portion of the pv laminate that includes the terminals, or a combination thereof. The laminate contact portion may extend on both sides of a connector, a window, a connector window, or a combination thereof. The laminate contact portion may be located at one opposite end of the keeper as a bridge.

The bridge may function to create a unitary piece. The bridge may function to eliminate multiple free ends. The bridge may function to connect ends together. The bridge may function to create a gripping location for the keeper to be added and/or removed without a user contacting the lamination frame, the pv laminate, or both. The bridge may be the thickest portion of the keeper. The thickness of the bridge may substantially match that of the pv laminate, the lamination frame, and the respective portion of the keeper that extends over the pv laminate and/or lamination frame. The bridge may overhang the lamination frame so that a seal is formed all of the way to the edge of the pv laminate. The bridge may extend around the window. The bridge may be generally "U" shaped. The bridge may extend on both sides of the window, the connector window, or both. The bridge may connect the sides of the keeper together forming one integral piece. The bridge may extend into an alignment region in the lamination frame. The bridge may be elevated relative to the lamination frame contact portion, the laminate contact portion, or both. One or more steps may separate the bridge from the lamination frame contact portion, the laminate contact portion, or both.

The one or more steps may create multiple different planes on the keeper. The bridge, lamination frame contact portion, laminate contact portion, or a combination thereof may each be located on different planes (i.e., planes formed by the steps). The steps may extend portions of the keeper above the lamination frame, into the lamination frame, parallel to the lamination frame, or a combination thereof. The steps may extend portions of the keeper within a plane that is substantially parallel to the plane of the lamination frame. The steps may extend into an alignment region within the lamination frame, around a portion of the lamination frame, or both. The steps may create one or more ledges so that the keeper has a complementary shape with the lamination frame. The one or more steps may increase the thickness of the keeper from top to bottom; from a bottom to a top, from edge to edge, as the keeper moves from a center to an edge of the keeper (e.g., the thickness may increase radially outward), of a combination thereof. The keeper may include a tapered face.

The tapered face may extend from the window towards the lamination frame, the pv laminate, or both as the keeper extends away from the window. The tapered face may be a decrease in thickness as the tapered face extends from the window to an edge. The tapered face may be a decrease in thickness so that pressure on the tapered face is reduced relative to other areas of the keeper that have a greater thickness. The tapered face may maintain a constant thickness of the lamination assembly (e.g., the tapered face may be located relative to a thicker part of the lamination assembly). The tapered face may align with the integration portion of the integrated frame. The tapered face may taper at the location where the connector extends into the pv laminate. The tapered face may be generally flat on one surface. The tapered face may include a connector window for receiving or accommodating a portion of a connector, the pv laminate, or both. The tapered face may have a generally flat surface on one side and a contoured surface that opposes the flat surface. The tapered face may include one or more locator slots. Preferably, the tapered face is located below the locator slots.

The locator slots may function to align the keeper on the lamination frame, around the connector, or both. The locator slots may function to prevent movement of the keeper relative to the lamination frame once the keeper is connected to the lamination frame. The locator slots may project outward from the keeper. The locator slots may be a recess. The locator slots may extend into the lamination frame. The locator slots may receive a portion of the lamination frame. The locator slots may be any shape that assists in aligning the keeper to the lamination frame. The locator slots may be round, square, rectangular, oval, octagonal, pentagonal, diamond, star, or a combination thereof. The locator slots may be located on the bridge, the lamination frame contact portion, the laminate contact portions, or a combination thereof. The locator slots may have a complementary shape to the embosses on the lamination frame. The keeper may include one or more locator slots. Preferably, the keeper includes a plurality of locator slots. More preferably, the keeper includes two locator slots and the locator slots are on opposing sides of the connector. The locator slots may extend all of the way through the keeper (i.e., be a through hole). Preferably, the locator slots are a recess in the keeper. The keeper may be one integral piece. The bridge, steps, tapered face, lamination frame contact portion, laminate contact portion, or a combination thereof may create one integral piece so that the keeper may be added and removed from the lamination frame of the lamination assembly.

The lamination assembly may function to connect a connector to a pv laminate. The lamination assembly may include a lamination frame, a main portion, an alignment region, a lamination border, embosses, or a combination thereof. The lamination frame may be the main portion of the lamination assembly. The lamination frame may function to create a pv laminate. The lamination frame may function to compress one or more layers of the pv laminate together so that a pv laminate is created. The lamination frame may position the layers of the pv laminate. The lamination frame may assist in creating one or more sealed edges about the pv laminate. The lamination frame may create a seal about a connector. The lamination frame may include one or more holes and preferably a plurality of holes. The holes may be in any location so that the holes function in removing or ejecting a pv laminate from a lamination assembly (e.g., separating the lamination frame from the lamination assembly). The holes may be sufficiently large so that pins, air, a fluid, a mechanical device, or a combination thereof can push the pv laminate out of the lamination assembly. The one or more holes may be located in the main portion of the lamination frame, the alignment region, a lamination border, or a combination thereof. The lamination frame may include one or more alignment regions that assist in aligning a connector, a keeper, an integrated frame, or a combination thereof to the lamination frame and/or pv laminate.

The one or more alignment regions may function to align a connector, an integrated frame, or both to a pv laminate, the lamination frame, or both. The one or more alignment regions may function to constrain the geometry of the connector, integrated frame, or both so that the connector, integrated frame, or both may only be installed in a predetermined position. The alignment regions may be a concave portion that receives all or a portion of the integration frame, the connector, or both. The alignment regions may include projections that extend through and/or around a portion of the connector, integration frame, or both so that the lamination frame, pv laminate, or both are aligned relative to the connector, integration frame, or both. The lamination frame may be free of alignment regions. The lamination frame may include a plurality of alignment regions. The alignment regions may be located along an edge of the lamination frame. The alignment regions may each receive all or a portion of one or more integrated frames, one or more connectors, or both. Each alignment recess may hold one connector. The alignment recesses may extend to the edge of the lamination frame. The alignment recesses may prevent lateral movement, longitudinal movement, rotational movement, or a combination thereof of the connector, the integrated frame, or both. The alignment recesses may work in conjunction with one or more embosses.

The one or more embosses may function to retain a keeper. The one or more embosses may prevent the keeper from moving relative to the lamination frame. The one or more embosses may be located at any location on the lamination frame that the embosses assist in aligning another component relative to the lamination frame. The one or more embosses may be located in the alignment region. The one or more embosses may ensure proper seating of the keeper over the connector, the pv laminate, or both. The one or more embosses may be complementary to the locator slots. The one or more embosses may project outward, be a recess, or both. The one or more embosses may be any shape that the locator slots can be. The lamination frame may include one or more embosses. Preferably, the lamination frame includes a plurality of embosses. More preferably, the lamination frame includes the same number of embosses as locator slots. The one or more embosses may assist in aligning the lamination borders on the lamination frame.

The one or more lamination borders may function to position one or more and preferably a plurality of pv laminate layers within the lamination frame. The lamination borders may function to align one or more laminate layers of the pv laminate with one or more connectors. Each lamination frame may include a single lamination border that extends around a periphery of the lamination frame. The lamination border may be comprised of one or more and preferably a plurality of discrete pieces. The plurality of discrete pieces may all be connected, in contact, or both. Preferably, the pieces of the lamination border are not connected together but are in contact, in close proximity, or both. The plurality of discrete pieces may be connected to the lamination frame and have an edge that is in contact with one or more adjacent lamination borders. The lamination borders may be spaced apart so that an integrated frame, a connector, or both may extend through the lamination border, off of the lamination frame, or both. The lamination borders may create a space that is substantially the same size as the pv laminate so that the individual layers of the pv laminate are aligned relative to each other. The lamination borders may be connected to the lamination frame by any fastener discussed herein. Preferably, the lamination borders are removably connected to the lamination frame. More preferably, the lamination borders are connected to the lamination frame by screws. The lamination borders may be a unitary part of the lamination frame. The lamination border may be created when material is removed from the lamination frame. The lamination border may be material that has not been removed during the formation of a lamination frame. The lamination frame may assist in supporting one or more bus bars during assembly of the layers into the lamination frame, during compression, during flow of one or more of the layers, or a combination thereof. The one or more lamination borders may create a barrier that prevents the flow of lamination material during formation and then prevents the flow of the bus bars with the lamination material. The lamination frame may be reusable. The lamination border from may be free of step of removing the lamination frame. The lamination borders may be interconnected and unitary relative to each other. The lamination borders may all be the same thickness, width, or both. The lamination borders may extend substantially the same length, width, or respective dimension as the part of the lamination frame that they are located. Preferably, a lamination border (i.e., top lamination border) that extends along a top of the lamination frame (i.e., a part of the lamination frame that accommodates the connectors) has a width that is greater than the width of the other lamination borders. The top lamination has a width that is about 1.5 times or more, about 2 times or more, about 2.5 times or more, or even about 3 times that of one of the other lamination borders and preferably all of the other lamination borders. The width of the lamination border may be substantially equal to that of the length of the connector. The width of the top lamination border may be greater than the length of the connector.

One or more bonding agents may function to bond an integrated frame to an adjacent component (e.g., a photovoltaic module, a base plate, a support portion, an overlap portion). The one or more bonding agents may function to provide additional adhesive to a predetermined area (e.g., a connection region). The one or more bonding agents may be a solid material and/or semi-solid material that is attached in a connection region. The one or more bonding agents may be substantially the same size as the connection area. The one or more bonding agents may have a height that is less than or equal to the posts. The one or more bonding agents may be square, rectangular, triangular, or a combination thereof. The one or more bonding agents may liquefy during lamination (e.g., become molten), connection of the integrated frame to the photovoltaic module, or both. The one or more bonding agents may be made of a polymer. The one or more bonding agents may be made of the same material as one of the layers of the active portion. The one or more bonding agents may be an encapsulant. The one or more bonding agents may be made of ethylene copolymers; polyethylene; ethylene vinyl acetate (EVA); silane modified polyethylene and copolymers; poly vinyl butyral (PVB); polyurethanes; butyl rubber; acrylic polymers and copolymers; epoxy resins; ionomers, or mixtures thereof.

Figure 1 illustrates a perspective view of a photovoltaic module 2. The photovoltaic module 2 includes a base plate 6 that has an overlap portion 10 and an active portion 4. The overlap portion 6 includes molded in handles 40 for carrying the photovoltaic module 2, and connection recesses 42 for forming a connection with adjacent photovoltaic modules 2. Adjacent to the connection recesses 42 are located a plurality of fastener locations 50. Opposing edges of the base plate 6 include connector channels 16 for receiving a connector 82 of a photovoltaic laminate 80. The connectors 82 are covered by an integrated frame 20 that protects the connectors 82 from damage and especially bending. The photovoltaic module 2 includes an active portion 4 that includes a photovoltaic laminate 80. A plurality of locking features 14 connect the photovoltaic laminate 80 to the support portion 8 of the base plate 6.

Figure 2 illustrates a close-up view of an exemplary integrated frame 20 of Figure 1. The integrated frame 20 is located in a connector channel 16 and is connected to a photovoltaic laminate 80 using an overlapped joint and adhesive. The photovoltaic laminate is connected to the base plate 6 by a locking feature 14. The base plate 6 includes a connection recess 42 that extends through the base plate 6 to form a connection with an adjacent photovoltaic module. A fastener location 50 is located proximate to the connection recesses 42 for connecting the base plate 6 to a roofing member (not shown).

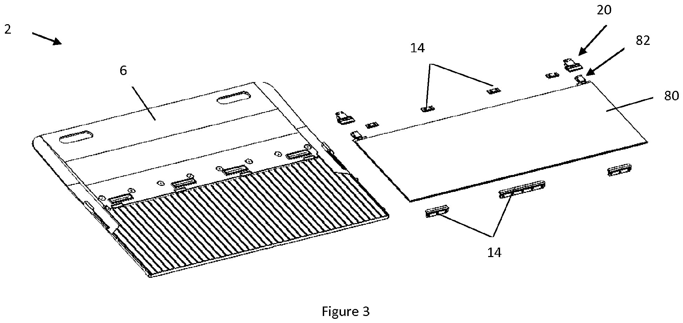

Figure 3 illustrates an exploded view of a photovoltaic module 2. The photovoltaic module 2 includes a base plate 6. A photovoltaic module 80 includes a pair of opposing connectors 82 that are each covered by an integrated frame 20 so that the connectors 82 are protected. A plurality of locking features 14 connect the photovoltaic laminate 80 to the base plate 6.

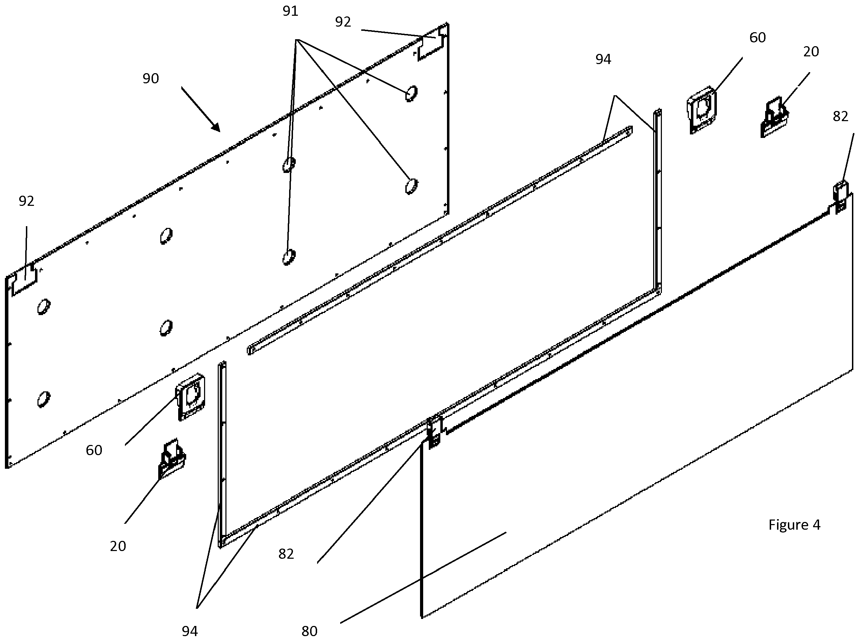

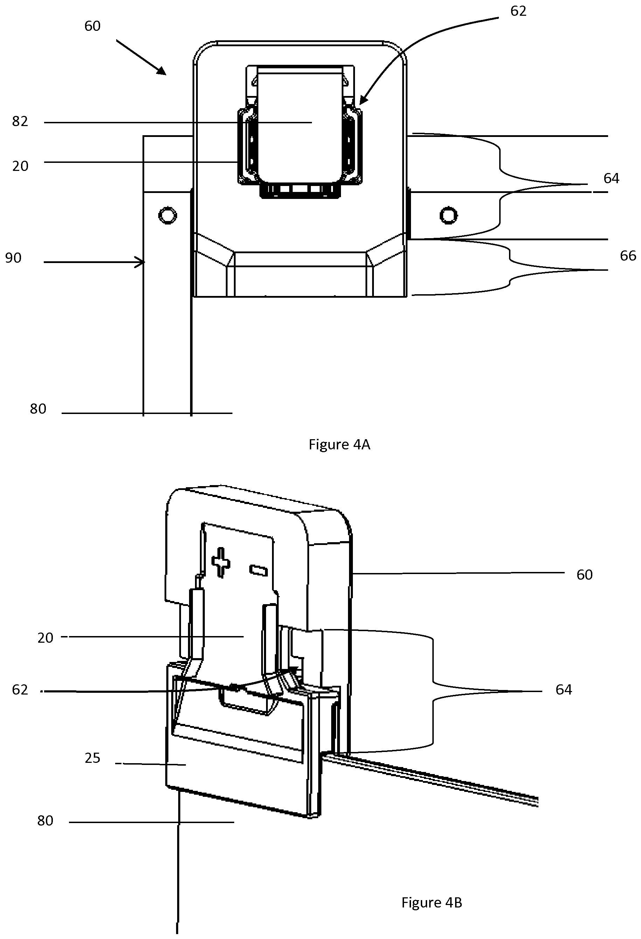

Figure 4 illustrates an exploded view of a lamination frame 90 and associated assembly. The lamination frame 90 includes two alignment regions 92 that are a recess for receiving a connector 82 so that the connector 82 is aligned within the lamination frame 90. A lamination border 94 is connected to the lamination frame 90 for creating a step. During assembly the integrated frame 20 is placed in the alignment region 92 and located between two pieces of the lamination border 94. A connector 82 is then placed in the integrated frame 20 and a keeper 60 is placed over the connector 82 and the integrated frame 20. The lamination pieces that make up the main portion of the photovoltaic laminate 80 are placed in the lamination frame 90. The main portion of the lamination frame 90 includes a plurality of holes 91 that assist in removing the pv laminate 80 from the lamination assembly. The assembly is compressed and the photovoltaic laminate 80 is connected to the connector 82 and the integrated frame 20.

Figure 4A illustrates a top view of a lamination assembly including a keeper 60 that is in communication with a lamination frame 90 and a photovoltaic laminate 80. The keeper 60 includes a window 62 that houses and holds in place an integrated frame 20 and a connector 82 so that during the lamination process a seal is formed around the connector 82. The keeper 60 has a lamination frame contact portion 64 that extends over and is in contact with the lamination frame 90 so that during the lamination process an even seal is formed around the connector 82. The keeper 60 includes a laminate contact portion 66 that extends over a portion of the photovoltaic laminate 80 so that during the lamination process a seal is formed around the connector 82.

Figure 4B illustrates a top view of an integrated frame 20 integrally connected to the photovoltaic laminate 80 at the connection region 25. A keeper 60 extends around a portion of the integrated frame 20 and includes a window 62 so that a portion of the integrated frame 20 extends through the keeper 60. The keeper 60 includes a lamination frame contact portion 64 that contacts the lamination frame (not shown) during the assembly process. The keeper 60 forms a temporary connection with connector (not shown) and the photovoltaic laminate 80 so that the keeper 60 is removable after the lamination process, before the photovoltaic laminate 80 is installed, or both.

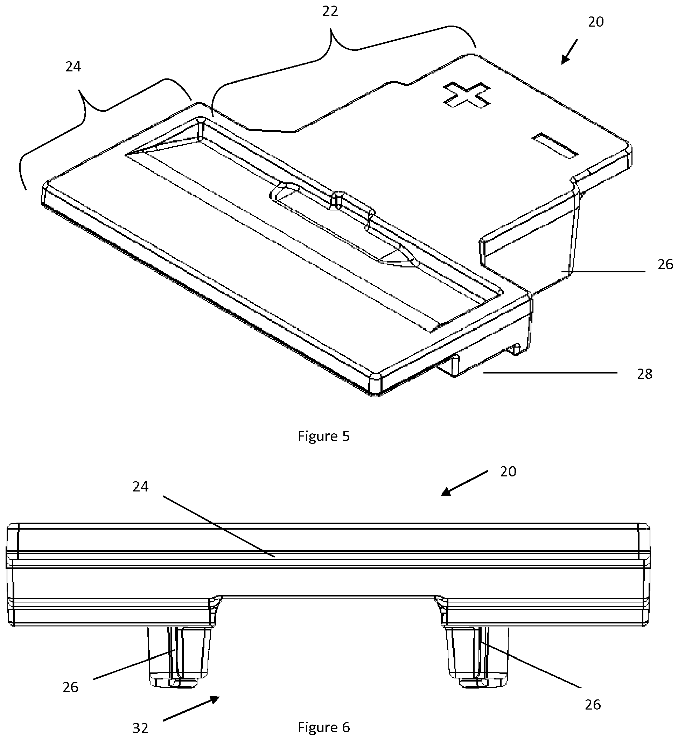

Figure 5 illustrates a close-up view of an exemplary integrated frame 20. The integrated frame 20 includes a cover 22 and an integration portion 24. The cover 22 extends over a connector (not shown) and the integration portion 24 connects the integrated frame 20 to the photovoltaic laminate (not shown). An extension 26 projects from the cover 22 towards the base plate (not shown). The bottom of the integration portion 24 has a step extension 28 that forms a connection with the photovoltaic laminate (not shown) and the base plate (not shown).

Figure 6 illustrates a front view of an exemplary integrated frame 20. The integrated frame 20 has a integration portion 24 that extends over and connects to a photovoltaic laminate (not shown). A pair of opposing extensions 26 extend from the cover (not shown) forming a connector recess 32 for receiving a connector (not shown).

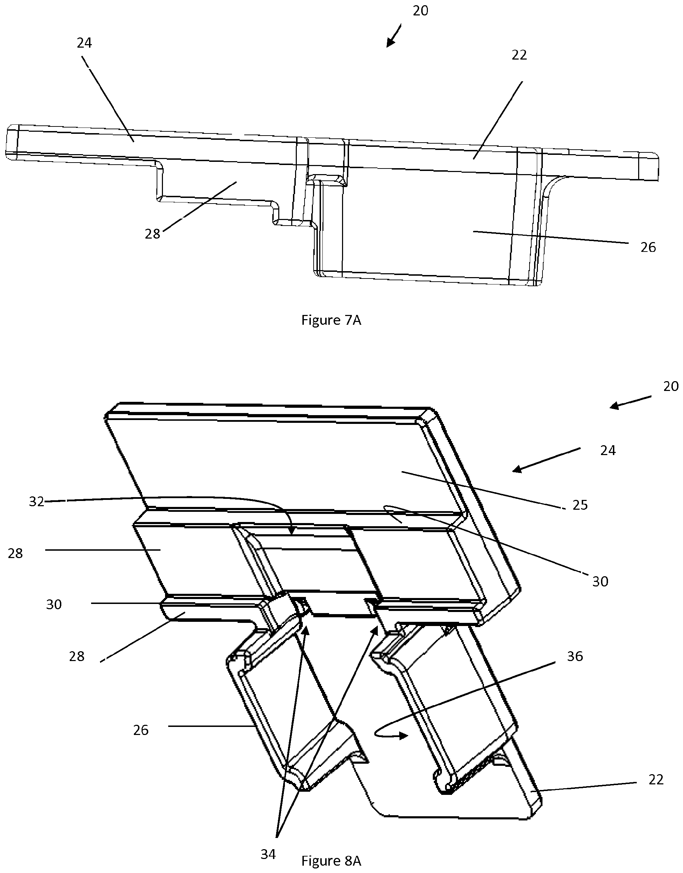

Figure 7A illustrates a side view of an exemplary integrated frame 20. The integrated frame 20 includes a cover 22 that is connected to an integration portion 24. The cover 22 extends over the connector (not shown) and has a pair of opposing extensions 26 that protect the sides of the connector. The integration portion 24 has a step extension 28 so that a fixed connection is formed between the integration portion 24 and the photovoltaic laminate 80 (not shown).

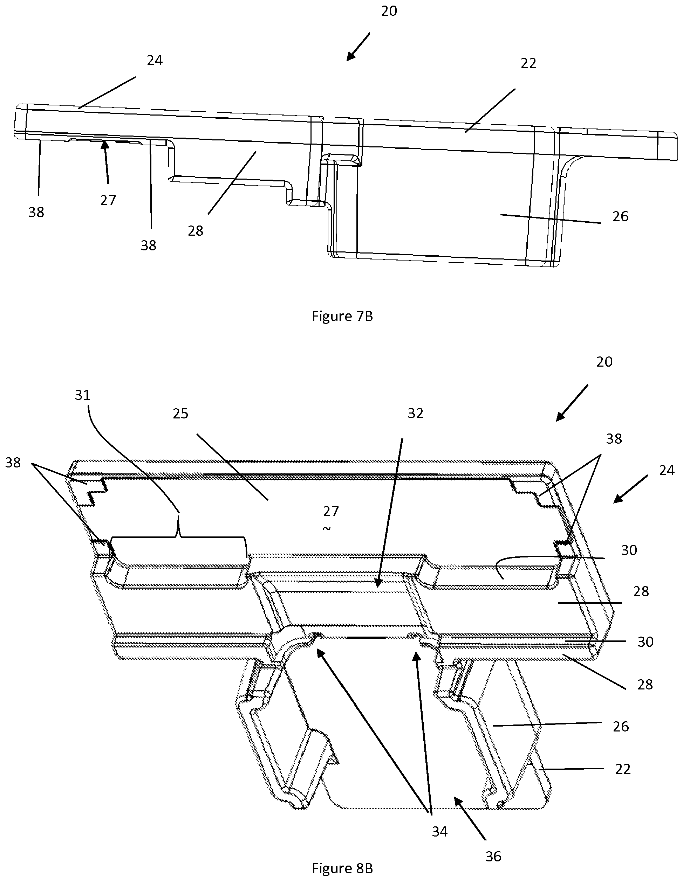

Figure 7B illustrates a side view of an exemplary integrated frame 20. The integrated frame 20 includes a cover that is connected to an integration portion 24. The integration portion 24 includes posts 38 that extend from the integration portion 24 and form a pocket 27 in the connection region (not shown) so that adhesive and/or a bonding agent are retained within the connection region. The cover 22 is connected to a pair of opposing extensions 26 that protect a connector (not shown). The integration portion 24 has a step extension 28 so that a fixed connection is formed between the integration portion 24 and the photovoltaic laminate (not shown).

Figure 8A illustrates a bottom perspective view of an exemplary integrated frame 20 of Figure 7A. As illustrated, the integration portion 24 has a connection region 25 and step extensions 28. The connection region 25 forms the primary connection with a photovoltaic laminate 80 (not shown) and some adhesive may extend to a vertical part, a horizontal part, or both of the step extension 28 and form a secondary connection. The step extension 28 includes a connector recess 32 that extends towards the cover 22 end of the integrated frame 20. A ledge 30 creates a stop that aligns the integrated frame 20 with a photovoltaic laminate (not shown). The ledge 30 separates the integration portion 24 and the cover 22. The cover 22 includes a pair of opposing extensions 26 that are located on both sides of the connector recess 32 as the connector recess 32 extends adjacent the cover 22 so that a connector fully and/or partially extends into the connection recess 32 and under the cover 22. The extensions 26 include alignment cavities 36 so that the integrated frame 20 and the connector (not shown) are aligned relative to each other. The connector recess 32 includes a pair of alignment recesses 34 that receive a portion of the connector extending from the photovoltaic laminate so that the connector (not shown), photovoltaic laminate (not shown), and the integrated frame 20 are all aligned.

Figure 8B illustrates a bottom perspective view of the integrated frame 20 of Figure 7B. The integration portion 24 has a connection region 25 and step extensions 28. The connection region 25 includes a pocket 27 that is a recess and is at least partially constrained by posts 38 and the ledge 30 so that adhesive or bonding agents (not shown) are retained within the connection region 25. The step extension 28 includes a connector recess 32 that extends towards the cover 22 end of the integrated frame 20. A ledge 30 creates a stop that aligns the integrated frame 20 with a photovoltaic laminate (not shown). The ledge 30 separates the integration portion 24 and the cover 22 and the ledge 30 includes a channel 31 for retaining adhesive and/or bonding agent proximate to the connection region 25. The cover 22 includes a pair of opposing extensions 26 that are located on both sides of the connector recess 32 as the connector recess 32 extends adjacent the cover 22 so that a connector fully and/or partially extends into the connection recess 32 and under the cover 22. The extensions 26 include alignment cavities 36 so that the integrated frame 20 and the connector (not shown) are aligned relative to each other. The connector recess 32 includes a pair of alignment recesses 34 that receive a portion of the connector extending from the photovoltaic laminate so that the connector (not shown), photovoltaic laminate (not shown), and the integrated frame 20 are all aligned.

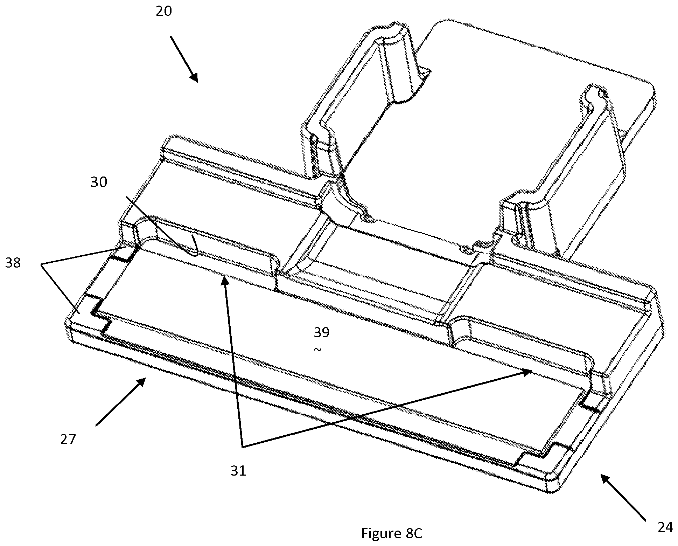

Figure 8C illustrates a perspective view of the bottom of the integrated frame 20 of Figure 7B. The integrated frame 20 includes an integration portion 24. The integration portion 24 has a pocket 27 that includes a plurality of posts 38 along a periphery of the pocket 27 that form the pocket 27. The pocket 27 as shown includes a bonding agent 39 that fits within the pocket 27 and assists in forming a connection. When bonding agent 39 is liquefied some of the bonding agent 39 extends into the channels 31 in the ledge 30, which assists in bonding.

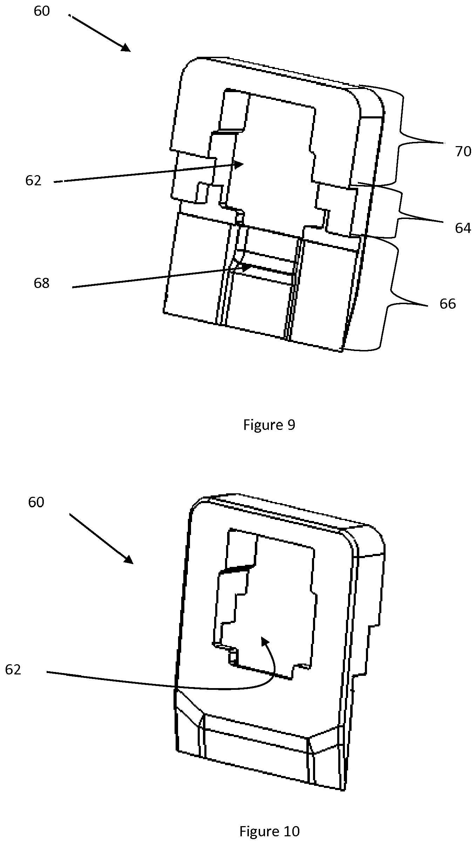

Figure 9 illustrates a side of the keeper 60 that contacts a connector (not shown). The keeper 60 includes a periphery that extends around a window 62. The periphery includes a bridge 70 that is connected to a laminate contact portion 66 by a pair of opposing lamination frame contact portions 64. The lamination frame contact portions 64 are both connected to a laminate contact portion 66 that includes a connector window 68 for receiving a connector (not shown).

Figure 10 illustrates a side of the keeper 60 that faces away from the connector (not shown). The keeper 60 receives a connector (not shown) in the window 62 and as illustrated is smooth and flat so that even pressure is applied to all portions of the keeper 60 to form a uniform seal around the connector (not shown).

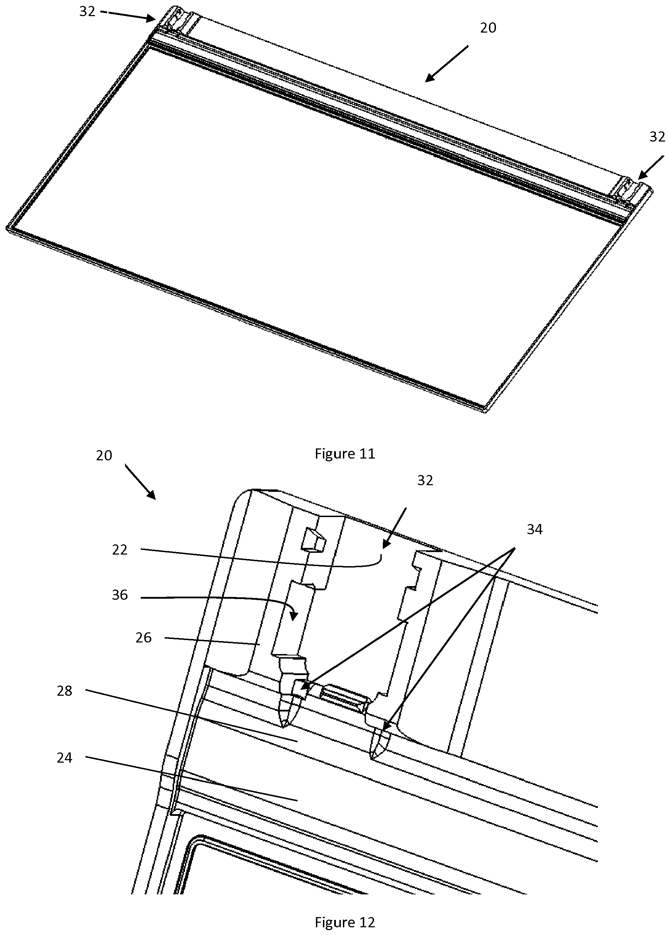

Figure 11 illustrates an example, of an exemplary integrated frame 20 having a pair of connector recesses 32 on opposing sides of the integrated frame 20. The integrated frame 20 is a unitary part of a lamination frame.

Figure 12 illustrates a close-up view of one connection recess 32 of an exemplary integrated frame 20. The connection recess 32 has a cover 22 that extends over the connection recess 32 and a pair of extensions 26 that extend along each side of the connection recess 32. Each of the extensions 26 include an alignment cavity 36 for receiving an ear of a connector (not shown) so that the connector is aligned within the integrated frame 20. An end of the connection recess 32 includes a pair of alignment recesses 34 that receive a corresponding feature of the connector so that the connector is aligned within the connection recess 32. The integrated frame 20 also includes an integration portion 24 that is connected to the photovoltaic laminate (not shown) and a step extension 28 that is tapered downward to form a connection with the photovoltaic laminate (not shown).

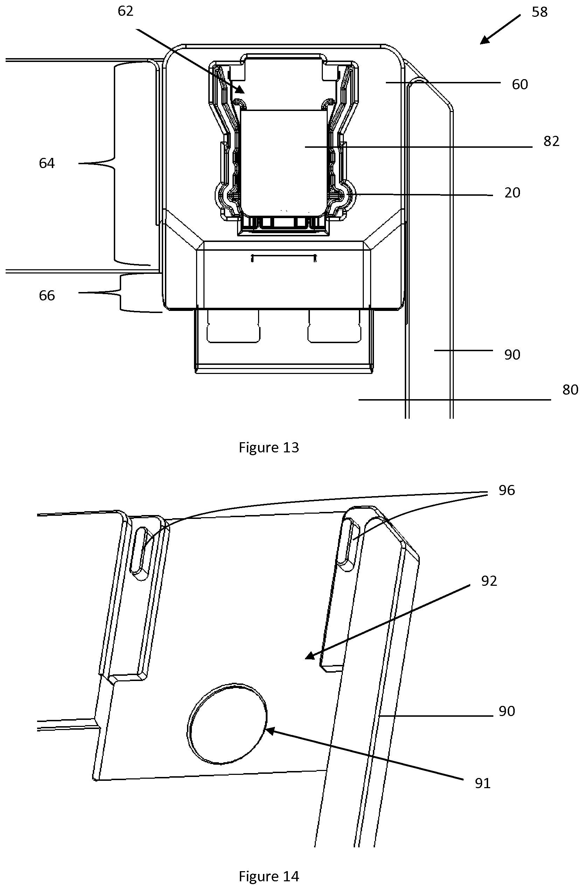

Figure 13 illustrates a top view of a portion of a lamination assembly 58. The lamination assembly 58 includes a keeper 60 has a lamination frame contact portion 64 that covers a portion of the lamination frame 90. The keeper 60 includes a window 62 that receives and exposes the connector 82 and a portion of the integrated frame 20. The keeper 60 tapers as the keeper extends over and into contact with the pv laminate 80 at the laminate contact portion 66. The lamination contact portion 64 is larger than the connector 82 and is slightly smaller than the keeper 60.

Figure 14 illustrates an alignment region 92 in the lamination frame 92. The alignment region 92 includes embosses 96 that align the keeper (not shown) with the alignment region 92. The alignment region 92 includes a hole 91 that assists in removing the connector (not shown) from the lamination assembly.

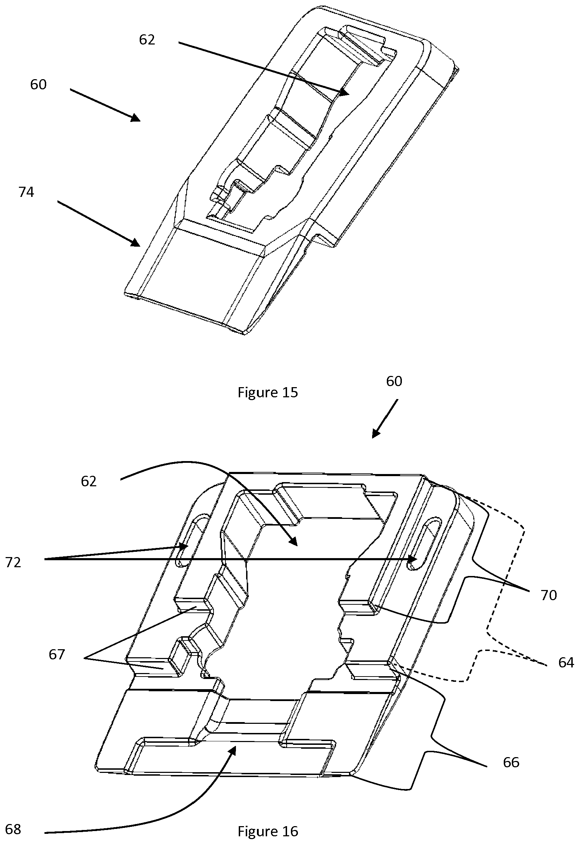

Figure 15 illustrates a perspective view of a top and side of a keeper 60. The top side of the keeper 60 includes a tapered face 74 that tapers towards the lamination frame (not shown. The keeper 60 also includes a window 62 that extends through the keeper.

Figure 16 illustrates a perspective view of a rear of the keeper 60. The keeper 60 includes a window 62 with locator slots 72 on opposing sides of the window 62. A connector window 68 extends from a bottom of the window 62 and accommodates a connector (not shown). A bridge 70 extends around a top portion of the keeper 60 and extends into the alignment region (not shown) of the lamination frame (not shown). The bridge 70 extends outward relative to the lamination frame contact portion 64 (i.e., there is a step between the bridge 70 and the lamination frame contact portion 64). The locator slots 72 are located in the lamination frame contact portion 64 proximate to the bridge 70. A step 67 is located between and separates the lamination frame contact portion 64 and the laminate contact portion 66 and the lamination contact portion 66 and the bridge 70.

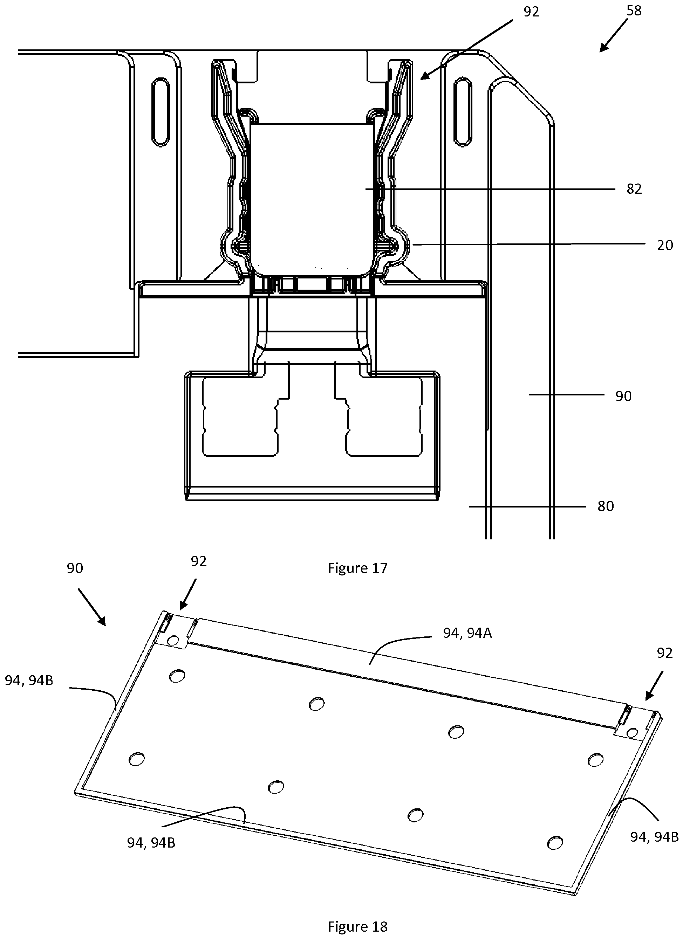

Figure 17 illustrates a lamination assembly 58 with the keeper removed. The lamination assembly 58 includes a connector 82 and keeper 20 located within the alignment region 92. The alignment region 92 of the lamination frame 90 aligns the pv laminate 80 with the connector 82 and assists in connecting the connector 82 to the lamination frame 90.

Figure 18 illustrates a perspective view of a lamination frame 90. The lamination frame 90 includes a pair of alignment regions 92 located at the ends of the lamination frame 90. An integral lamination border 94 extends around a peripheral edge of the lamination frame 90 forming a recess for receiving the pv laminate layers so that the layers and connector can be formed together. The lamination border 94A (top lamination border) adjacent the top of the lamination frame 94 has a width that is nearly triple the width of lamination borders 94B on the other three edges.

Any numerical values recited herein include all values from the lower value to the upper value in increments of one unit provided that there is a separation of at least 2 units between any lower value and any higher value. As an example, if it is stated that the amount of a component or a value of a process variable such as, for example, temperature, pressure, time and the like is, for example, from 1 to 90, preferably from 20 to 80, more preferably from 30 to 70, it is intended that values such as 15 to 85, 22 to 68, 43 to 51, 30 to 32 etc. are expressly enumerated in this specification. For values which are less than one, one unit is considered to be 0.0001, 0.001, 0.01 or 0.1 as appropriate. These are only examples of what is specifically intended and all possible combinations of numerical values between the lowest value and the highest value enumerated are to be considered to be expressly stated in this application in a similar manner.

Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints.

The disclosures of all articles and references, including patent applications and publications, are incorporated by reference for all purposes. The term "consisting essentially of" to describe a combination shall include the elements, ingredients, components or steps identified, and such other elements ingredients, components or steps that do not materially affect the basic and novel characteristics of the combination. The use of the terms "comprising" or "including" to describe combinations of elements, ingredients, components or steps herein also contemplates embodiments that consist essentially of the elements, ingredients, components or steps. By use of the term "may" herein, it is intended that any described attributes that "may" be included are optional.

Plural elements, ingredients, components or steps can be provided by a single integrated element, ingredient, component or step. Alternatively, a single integrated element, ingredient, component or step might be divided into separate plural elements, ingredients, components or steps. The disclosure of "a" or "one" to describe an element, ingredient, component or step is not intended to foreclose additional elements, ingredients, components or steps.

It is understood that the above description is intended to be illustrative and not restrictive. Many embodiments as well as many applications besides the examples provided will be apparent to those of skill in the art upon reading the above description. The scope of the teachings should, therefore, be determined not with reference to the above description, but should instead be determined with reference to the appended claims, along with the full scope of equivalents to which such claims are entitled. The disclosures of all articles and references, including patent applications and publications, are incorporated by reference for all purposes. The omission in the following claims of any aspect of subject matter that is disclosed herein is not a disclaimer of such subject matter, nor should it be regarded that the inventors did not consider such subject matter to be part of the disclosed inventive subject matter.

## Claims

1. A photovoltaic module (2) comprising:
a. a photovoltaic laminate (80) including:
i. one or more connectors (82) have a part partially located within the photovoltaic laminate (80) and a part partially extending from the photovoltaic laminate (80), and
ii. one or more integrated frames (20) in communication with each of the one or more connectors (82), each of the integrated frames (20) including:
1. an integration portion (24) that connects the integrated frame (20) to the photovoltaic laminate (80), and the integration portion (24) extending from the photovoltaic laminate (80),
2. a cover portion (22) that extends from the integration portion (24) over the part of connectors (82) partially extending from the photovoltaic laminate (80) so that the cover (22) protects and provides support to the part one or more connectors (82) partially extending from the photovoltaic laminate (80) during a manufacturing process, during use, during installation, or a combination thereof; and
wherein each of the one or more integrated frames (20) are connected to the photovoltaic laminate (80) in a location proximate to the one or more connectors (82) so that the one or more integrated frames (20) align the one or more connectors (82) with a manufacturing assembly.

2. The photovoltaic module (2) of claim 1, wherein each of the one or more integrated frames (20) form a cantilever connection with the photovoltaic laminate (80) and extend over the connector (82) and each of the one or more integrated frames (20) include an integration portion (24) that forms the cantilever connection with the photovoltaic laminate (80).

3. The photovoltaic module (2) of any of the preceding claims, wherein an extension (26) extends from each edge of the cover portion (22) towards a base plate (6) of the photovoltaic module (2) so that sides of each of the one or more connectors (82) are protected by the extensions (26).

4. The photovoltaic module (2) of claim 2, wherein the integration portion (24) includes a step extension (28) that mirrors a shape of the photovoltaic laminate (80) so that a secure connection is formed between the one or more integrated frames (20) and the photovoltaic laminate (80).

5. The photovoltaic module (2) of claim 2, wherein the integration portion (24) includes a ledge (30) so that the integration portion (24) and the photovoltaic laminate (80) are aligned relative to each other, and the ledge (30) includes one or more channels.

6. The photovoltaic module (2) of claim 2, wherein a connector recess (32) is formed between the extensions and each of the extensions include an alignment cavity (36) that prevents longitudinal movement of the one or more connectors (82) relative to each of the integrated frames (20), and the connector recess includes one or more alignment recesses (34) that extend from the cover (22) to the integration portion (24).

7. The photovoltaic module (2) of any of the preceding claims, wherein the one or more integrated frames (20) include a connection region that has a pocket (27) for receiving a bonding agent, adhesive, or both and the pocket (27) is formed by one or more posts that extend at least partially along one or more sides of the connection region.

8. A method for forming a photovoltaic laminate (80), the method comprising:
a. aligning one or more integrated frames (20) in a lamination frame (90);
b. aligning one or more connectors (82) with each of the one or more integrated frames (20);
c. providing one or more layers of a laminate (80) over the lamination frame (90) and a portion of the integrated frame (20);
d. applying pressure to the one or more layers of the laminate (80), the portion of the integration frame (20), and the lamination frame (90); and
e. heating the one or more layers of the laminate (80), the portion of the integration frame (20), and the lamination frame (90).

9. The method of claim 8, wherein a keeper (60) is applied over the one or more layers of laminate (80) before the heat, the pressure, or both are applied to the one or more layers of the laminate (80).

10. The method of claim 8, wherein the keeper (60) includes a window (62) that receives all or a portion of the integrated frame (20), the connector (82), or both and the keeper (60) includes a laminate contact portion extending over a portion of the integrated frame (20) so that when the pressure, the heat, or both are applied the lamination frame (90) evenly distributes the heat, the pressure, or both at a point of contact forming a seal around one or more connectors (82) extending from the photovoltaic laminate (80).

11. The method of any of claims 8 through 10, wherein the keeper (60) is removed and the method includes a step of reusing the keeper.

12. The method of any of claims 8 through 11, wherein the method includes a step of aligning a pair of locator slots (72) in the keeper (60) with embosses extending from the lamination frame (90) so that the keeper (60) and lamination frame (90) are aligned relative to each other.

13. The method of any of claims 8 through 12, wherein the keeper (60) includes one or more steps and the one or more steps are formed between the bridge (70) and the lamination frame contact portion, the lamination frame contact portion and the laminate contact portion, or both, and the laminate contact portion has a tapered face.

14. The photovoltaic module of any of claims 1 through 7, wherein the one or more connectors (82) have a portion that is sealed within the photovoltaic laminate (80) and a portion that extends out of the photovoltaic laminate (80).

15. The photovoltaic module of any of claim 1 through 7, wherein the photovoltaic module (2) includes a base plate (6), and the one or more connectors (82) are located between the one or more integrated frames (20) and the base plate (6).

## Patentansprüche

1. Ein Fotovoltaikmodul (2), das Folgendes beinhaltet:
a. ein Fotovoltaiklaminat (80), das Folgendes umfasst:
i. ein oder mehrere Verbindungsstücke (82), die einen Teil, der sich teilweise innerhalb des Fotovoltaiklaminats (80) befindet, und einen Teil, der sich teilweise von dem Fotovoltaiklaminat (80) ausdehnt, aufweisen, und
ii. einen oder mehrere integrierte Rahmen (20) in Kommunikation mit jedem des einen oder der mehreren Verbindungsstücke (82), wobei jeder der integrierten Rahmen (20) Folgendes umfasst:
1. einen Integrationsabschnitt (24), der den integrierten Rahmen (20) mit dem Fotovoltaiklaminat (80) verbindet, und den Integrationsabschnitt (24), der sich von dem Fotovoltaiklaminat (80) ausdehnt,
2. einen Abdeckungsabschnitt (22), der sich von dem Integrationsabschnitt (24) über den Teil der Verbindungsstücke (82) ausdehnt, die sich teilweise von dem Fotovoltaiklaminat (80) ausdehnen, sodass die Abdeckung (22) den Teil des einen oder der mehreren Verbindungsstücke (82), die sich teilweise von dem Fotovoltaiklaminat (80) ausdehnen, während eines Herstellungsprozesses, während einer Verwendung, während einer Installation oder einer Kombination davon, schützt und diesem Halt bereitstellt; und
wobei jeder des einen oder der mehreren integrierten Rahmen (20) mit dem Fotovoltaiklaminat (80) an einer Stelle nahe des einen oder der mehreren Verbindungsstücke (82) verbunden sind, sodass der eine oder die mehreren integrierten Rahmen (20) das eine oder die mehreren Verbindungsstücke (82) mit einer Herstellungsanordnung ausrichten.

2. Fotovoltaikmodul (2) gemäß Anspruch 1, wobei jeder der einen oder der mehreren integrierten Rahmen (20) eine Auslegerverbindung mit dem Fotovoltaiklaminat (80) bilden und sich über das Verbindungsstück (82) ausdehnen und jeder der einen oder der mehreren integrierten Rahmen (20) einen Integrationsabschnitt (24) umfassen, der die Auslegerverbindung mit dem Fotovoltaiklaminat (80) bildet.

3. Fotovoltaikmodul (2) gemäß einem der vorhergehenden Ansprüche, wobei sich eine Ausdehnung (26) von jeder Kante des Abdeckungsabschnitts (22) in Richtung einer Grundplatte (6) des Fotovoltaikmoduls (2) ausdehnt, sodass Seiten von jedem des einen oder der mehreren Verbindungsstücke (82) durch die Ausdehnungen (26) geschützt sind.

4. Fotovoltaikmodul (2) gemäß Anspruch 2, wobei der Integrationsabschnitt (24) eine Stufenausdehnung (28) umfasst, die eine Form des Fotovoltaiklaminats (80) widerspiegelt, sodass eine sichere Verbindung zwischen dem einen oder der mehreren integrierten Rahmen (20) und dem Fotovoltaiklaminat (80) gebildet wird.

5. Fotovoltaikmodul (2) gemäß Anspruch 2, wobei der Integrationsabschnitt (24) einen Vorsprung (30) umfasst, sodass der Integrationsabschnitt (24) und das Fotovoltaiklaminat (80) relativ zueinander ausgerichtet sind, und der Vorsprung (30) einen oder mehrere Kanäle umfasst.

6. Fotovoltaikmodul (2) gemäß Anspruch 2, wobei eine Verbindungsstückaussparung (32) zwischen den Ausdehnungen gebildet ist und jede der Ausdehnungen einen Ausrichtungshohlraum (36) umfasst, der eine Längsbewegung des einen oder der mehreren Verbindungsstücke (82) relativ zu jedem der integrierten Rahmen (20) verhindert, und die Verbindungsstückaussparung eine oder mehrere Ausrichtungsaussparungen (34) umfasst, die sich von dem Abdeckungsabschnitt (22) zu dem Integrationsabschnitt (24) ausdehnen.

7. Fotovoltaikmodul (2) gemäß einem der vorhergehenden Ansprüche, wobei der eine oder die mehreren integrierten Rahmen (20) einen Verbindungsbereich umfassen, der eine Tasche (27) zum Aufnehmen eines Bindemittels, Klebstoffs oder beidem aufweist und die Tasche (27) durch einen oder mehrere Balken gebildet ist, die sich mindestens teilweise entlang einer oder mehrerer Seiten des Verbindungsbereichs ausdehnen.

8. Ein Verfahren zum Bilden eines Fotovoltaiklaminats (80), wobei das Verfahren Folgendes beinhaltet:
a. Ausrichten eines oder mehrerer integrierter Rahmen (20) in einem Laminierrahmen (90);
b. Ausrichten eines oder mehrerer Verbindungsstücke (82) mit jedem des einen oder der mehreren integrierten Rahmen (20);
c. Bereitstellen einer oder mehrerer Schichten eines Laminats (80) über dem Laminierrahmen (90) und einem Abschnitt des integrierten Rahmens (20);
d. Ausüben von Druck auf die eine oder die mehreren Schichten des Laminats (80), den Abschnitt des Integrationsrahmens (20) und den Laminierrahmen (90); und
e. Erwärmen der einen oder der mehreren Schichten des Laminats (80), des Abschnitts des Integrationsrahmens (20) und des Laminierrahmens (90).

9. Verfahren gemäß Anspruch 8, wobei eine Halterung (60) über der einen oder der mehreren Schichten des Laminats (80) angewendet wird, bevor die Wärme, der Druck oder beide auf die eine oder die mehreren Schichten des Laminats (80) angewendet werden.

10. Verfahren gemäß Anspruch 8, wobei die Halterung (60) ein Fenster (62) umfasst, das alle oder einen Abschnitt des integrierten Rahmens (20), das Verbindungsstück (82) oder beide aufnimmt, und wobei die Halterung (60) einen Laminatkontaktabschnitt umfasst, der sich über einen Abschnitt des integrierten Rahmens (20) ausdehnt, sodass, wenn der Druck, die Wärme oder beide angewendet werden, der Laminierrahmen (90) die Wärme oder den Druck oder beide an einem Kontaktpunkt gleichmäßig verteilt und eine Dichtung um eine oder mehrere Verbindungsstücke (82) herum bildet, die sich von dem Fotovoltaiklaminat (80) ausdehnen.

11. Verfahren gemäß einem der Ansprüche 8 bis 10, wobei die Halterung (60) entfernt ist und das Verfahren einen Schritt des Wiederverwendens der Halterung umfasst.

12. Verfahren gemäß einem der Ansprüche 8 bis 11, wobei das Verfahren einen Schritt des Ausrichtens eines Paares von Positionierungsschlitzen (72) in der Halterung (60) mit Prägungen umfasst, die sich von dem Laminierrahmen (90) ausdehnen, sodass die Halterung (60) und der Laminierrahmen (90) relativ zueinander ausgerichtet sind.

13. Verfahren gemäß einem der Ansprüche 8 bis 12, wobei die Halterung (60) einen oder mehrere Schritte umfasst und der eine oder die mehreren Schritte zwischen der Brücke (70) und dem Kontaktabschnitt des Laminierrahmens, dem Kontaktabschnitt des Laminierrahmens und dem Kontaktabschnitt des Laminats oder beiden gebildet sind, und der Kontaktabschnitt des Laminats eine verjüngte Fläche aufweist.

14. Fotovoltaikmodul gemäß einem der Ansprüche 1 bis 7, wobei das eine oder die mehreren Verbindungsstücke (82) einen innerhalb des Fotovoltaiklaminats (80) abgedichteten Abschnitt und einen sich aus dem Fotovoltaiklaminat (80) ausdehnenden Abschnitt aufweisen.

15. Fotovoltaikmodul gemäß einem der Ansprüche 1 bis 7, wobei das Fotovoltaikmodul (2) eine Grundplatte (6) umfasst und sich das eine oder die mehreren Verbindungsstücke (82) zwischen dem einen oder den mehreren integrierten Rahmen (20) und der Grundplatte (6) befinden.

## Revendications

1. Un module photovoltaïque (2) comprenant :
a. un stratifié photovoltaïque (80) incluant :
i. un ou plusieurs connecteurs (82) ayant une portion située partiellement à l'intérieur du stratifié photovoltaïque (80) et une portion s'étendant partiellement depuis le stratifié photovoltaïque (80), et
ii. un ou plusieurs cadres intégrés (20) en communication avec chacun des un ou plusieurs connecteurs (82), chacun des cadres intégrés (20) incluant :
1. une portion d'intégration (24) qui raccorde le cadre intégré (20) au stratifié photovoltaïque (80), et la portion d'intégration (24) s'étendant depuis le stratifié photovoltaïque (80),
2. une portion formant couvercle (22) qui s'étend depuis la portion d'intégration (24) par-dessus la portion de connecteurs (82) s'étendant partiellement depuis le stratifié photovoltaïque (80) de sorte que le couvercle (22) protège et fournit un support à la portion des un ou plusieurs connecteurs (82) s'étendant partiellement depuis le stratifié photovoltaïque (80) pendant un procédé de fabrication, pendant l'utilisation, pendant l'installation, ou une combinaison de ceux-ci ; et
où chacun des un ou plusieurs cadres intégrés (20) est raccordé au stratifié photovoltaïque (80) en un emplacement à proximité des un ou plusieurs connecteurs (82) de sorte que les un ou plusieurs cadres intégrés (20) alignent les un ou plusieurs connecteurs (82) avec un ensemble de fabrication.

2. Le module photovoltaïque (2) de la revendication 1, où chacun des un ou plusieurs cadres intégrés (20) forme un raccord en porte-à-faux avec le stratifié photovoltaïque (80) et s'étend par-dessus le connecteur (82) et chacun des un ou plusieurs cadres intégrés (20) inclut une portion d'intégration (24) qui forme le raccord en porte-à-faux avec le stratifié photovoltaïque (80).

3. Le module photovoltaïque (2) de n'importe lesquelles des revendications précédentes, où une extension (26) s'étend depuis chaque bord de la portion formant couvercle (22) vers une plaque de base (6) du module photovoltaïque (2) de sorte que des côtés de chacun des un ou plusieurs connecteurs (82) sont protégés par les extensions (26).

4. Le module photovoltaïque (2) de la revendication 2, où la portion d'intégration (24) inclut une extension à gradin (28) qui reflète une forme du stratifié photovoltaïque (80) de sorte qu'un raccord sécurisé est formé entre les un ou plusieurs cadres intégrés (20) et le stratifié photovoltaïque (80).

5. Le module photovoltaïque (2) de la revendication 2, où la portion d'intégration (24) inclut un rebord (30) de sorte que la portion d'intégration (24) et le stratifié photovoltaïque (80) sont alignés mutuellement, et le rebord (30) inclut un ou plusieurs canaux.

6. Le module photovoltaïque (2) de la revendication 2, où un évidement de connecteur (32) est formé entre les extensions et chacune des extensions inclut une cavité d'alignement (36) qui empêche un déplacement longitudinal des un ou plusieurs connecteurs (82) par rapport à chacun des cadres intégrés (20), et l'évidement de connecteur inclut un ou plusieurs évidements d'alignement (34) qui s'étendent depuis le couvercle (22) jusqu'à la portion d'intégration (24).

7. Le module photovoltaïque (2) de n'importe lesquelles des revendications précédentes, où les un ou plusieurs cadres intégrés (20) incluent une région de raccord qui a une poche (27) pour recevoir un agent de liaison, un adhésif, ou les deux et la poche (27) est formée par un ou plusieurs montants qui s'étendent au moins partiellement le long d'un ou de plusieurs côtés de la région de raccord.

8. Un procédé pour former un stratifié photovoltaïque (80), le procédé comprenant :
a. l'alignement d'un ou de plusieurs cadres intégrés (20) dans un cadre de stratification (90) ;
b. l'alignement d'un ou de plusieurs connecteurs (82) avec chacun des un ou plusieurs cadres intégrés (20) ;
c. l'apport d'une ou de plusieurs couches d'un stratifié (80) par-dessus le cadre de stratification (90) et une portion du cadre intégré (20) ;
d. l'application de pression sur les une ou plusieurs couches du stratifié (80), la portion du cadre d'intégration (20), et le cadre de stratification (90) ; et
e. le chauffage des une ou plusieurs couches du stratifié (80), de la portion du cadre d'intégration (20), et du cadre de stratification (90).

9. Le procédé de la revendication 8, où une armature (60) est appliquée par-dessus les une ou plusieurs couches de stratifié (80) avant que la chaleur, la pression, ou les deux ne soient appliquées sur les une ou plusieurs couches du stratifié (80).

10. Le procédé de la revendication 8, où l'armature (60) inclut une fenêtre (62) qui reçoit la totalité ou une portion du cadre intégré (20), le connecteur (82), ou les deux et l'armature (60) inclut une portion de contact avec le stratifié s'étendant par-dessus une portion du cadre intégré (20) de sorte que lorsque la pression, la chaleur, ou les deux sont appliquées, le cadre de stratification (90) répartit uniformément la chaleur, la pression, ou les deux au niveau d'un point de contact formant un joint de scellement autour d'un ou de plusieurs connecteurs (82) s'étendant depuis le stratifié photovoltaïque (80).

11. Le procédé de n'importe lesquelles des revendications 8 à 10, où l'armature (60) est retirée et le procédé inclut une étape de réutilisation de l'armature.

12. Le procédé de n'importe lesquelles des revendications 8 à 11, où le procédé inclut une étape d'alignement d'une paire de fentes de localisation (72) dans l'armature (60) avec des reliefs s'étendant depuis le cadre de stratification (90) de sorte que l'armature (60) et le cadre de stratification (90) sont alignés mutuellement.

13. Le procédé de n'importe lesquelles des revendications 8 à 12, où l'armature (60) inclut un ou plusieurs gradins et les un ou plusieurs gradins sont formés entre le pont (70) et la portion de contact avec le cadre de stratification, la portion de contact avec le cadre de stratification et la portion de contact avec le stratifié, ou les deux, et la portion de contact avec le stratifié a une face effilée.

14. Le module photovoltaïque de n'importe lesquelles des revendications 1 à 7, où les un ou plusieurs connecteurs (82) ont une portion qui est scellée à l'intérieur du stratifié photovoltaïque (80) et une portion qui s'étend hors du stratifié photovoltaïque (80).

15. Le module photovoltaïque de n'importe lesquelles des revendications 1 à 7, où le module photovoltaïque (2) inclut une plaque de base (6), et les un ou plusieurs connecteurs (82) sont situés entre les un ou plusieurs cadres intégrés (20) et la plaque de base (6).
